# EUROPÄISCHE PATENTSCHRIFT

(11) **EP 1 485 416 B1**
(45) Veröffentlichungstag und Bekanntmachung des Hinweises auf die Patenterteilung: **20.06.2007**
(21) Anmeldenummer: 03704671.1
(22) Anmeldetag: 21.02.2003
(51) Int. Cl.: C08F 230/08, C08F 246/00, B32B 27/30

(54) **HAGELBESTÄNDIGES VERBUND-ACRYLGLAS UND VERFAHREN ZU SEINER HERSTELLUNG**
HAIL-RESISTANT ACRYLIC LAMINATED GLASS AND METHOD FOR PRODUCING THE SAME
VERRE ACRYLIQUE FEUILLETE RESISTANT A LA GRELE ET PROCEDE DE FABRICATION ASSOCIE

(30) Priorität: 20.03.2002 DE 10212458
(43) Veröffentlichungstag der Anmeldung: 15.12.2004
(73) Patentinhaber: Röhm GmbH, 64293 Darmstadt (DE)
(72) Erfinder: HASSKERL, Thomas, 61476 Kronberg (DE); NEEB, Rolf, 64219 Pfungstadt (DE); SEYOUM, Ghirmay, 63329 Egelsbach (DE); WIEBEL, Wolffgang, 63808 Haibach (DE)
(86) Internationale Anmeldenummer: PCT/EP2003/001788
(87) Internationale Veröffentlichungsnummer: WO 2003/078485

(56) Entgegenhaltungen:
- DE-A- 2 951 763
- DE-A- 4 301 848

## Beschreibung

Die vorliegende Erfindung betrifft eine polymerisierbare Zusammensetzung, hieraus erhältliche Polymerisate und Verbundgläser, ein Verfahren zur Herstellung von Verbundgläsern sowie ihre Verwendung. Die erfindungsgemäßen Verbundgläser zeichnen sich durch eine hohe Hagelbeständigkeit, Verbundfestigkeit, Steifigkeit, Gasdichtigkeit, Kratzfestigkeit, Schlagfestigkeit, Chemikalienbeständigkeit sowie durch ein niedrigeres spezifisches Gewicht aus und sind daher für Verglasungen jedwelcher Art besonders geeignet.

Bekannterweise weisen Verglasungen aus konventionellen Gläsern, wie beispielsweise Silikatgläsern, ein vergleichsweise hohes Gewicht auf, welches für viele Anwendungen als nachteilig ist. Es wird daher häufig versucht, diese durch Verglasungen auf Basis hochtransparenter Kunststoffe, wie beispielsweise Polymethylmethacrylat und Polycarbonat, zu ersetzen. Jedoch stößt man hierbei aufgrund der differierenden Eigenschaftsprofile von transparenten Kunststoffen einerseits und konventionellen Gläsern andererseits häufig an die Grenzen des technisch machbaren.

Beispielsweise bewirkt der polare Charakter von PMMA eine relativ hohe Wasseraufnahme, damit verbunden eine Quellung und Dimensionsänderungen durch Wasseraufnahme bzw. Trocknung. Weiterhin ist PMMA nicht gasdicht, was insbesondere bei Verscheibungen dazu führt, dass Gase durch das Material hindurch diffundieren und sich zum Beispiel im Falle von Wasserdampf als flüssiges Kondensat abscheiden können, wodurch beispielsweise die Transparenz einer Doppelverglasung leidet.

Zur Lösung dieses Problems sind Oberflächenbeschichtungen mit gasdichten Barriereschichten vorgeschlagen worden. Eine Methode zum Erzielen einer Gasdichtigkeit von polymeren Kunststoffbehältern durch Beschichten mit einer dünnen anorganischen Oxidschicht mittels plasmaunterstützter Abscheidung wird in WO 98/40531 beschrieben. Dieses Verfahren kann beispielsweise bei Polyethylenterephthalat (PET) für Getränkeflaschen angewendet werden. PMMA jedoch ist einer solchen Behandlung aufgrund seiner Empfindlichkeit gegenüber Plasma nicht zugänglich.

In diesem Zusammenhang ist weiterhin zu berücksichtigen, dass eine Beschichtung von Kunststoffen mit dünnen Barriereschichten zwar eine Verbesserung der Gasdichtigkeit bewirkt, jedoch führt sie zu keiner Verbesserung der Steifigkeit und gewährt keine Langlebigkeit, wie sie insbesondere bei Verglasungen in hohem Maße gefordert wird.

Einen alternativen Ansatz zur Verbesserung der Gasdichtigkeit von Kunststoffen stellen die Verbundscheiben aus Silikatglas und einem Kunststoffkern dar. Zum Beispiel beschreibt BP 1 600 867 (James Wallace Langlands) ein Sicherheitsglas, bei dem ein ungesättigtes Polyesterharz zwischen zwei Glasscheiben gefüllt und gehärtet wird. Zur Haftvermittlung zwischen dem Kunststoffkern und dem Silikatglas wird dem Harz γ-Methacryloxypropyl-trimethoxysilan zugesetzt. Das Harz kann mit Farbstoff, Drahtgewebe oder dekorativen Füllstoffen ausgerüstet werden, um spezielle Effekte zu erzielen. Eine besondere Verstärkung kann erzielt werden, indem man ein Harz mit einer größeren Schwindung einsetzt und die durch den Schrumpf resultierende Eigenspannung zur Erhöhung der Schlagfestigkeit nutzt. Ein Nachteil solcher Systeme ist die eingeschränkte Witterungsbeständigkeit ungesättigter Polyester und die Gefahr des Haftungsverlusts zwischen Glasscheibe und Kunststoffkern aufgrund der eingefrorenen Spannung.

In DE 430 1848 (Werner Siol et al) wird ein Verbundsystem aus zwei Acrylglasscheiben und dazwischenliegender Klebstoffschicht, bestehend aus einem thermoplastischen Elastomer, beschrieben. Das thermoplastische Elastomer enthält ein Kammpolymer und hat eine Reißdehnung von 433 %. Die Verbundplatte wird durch Verpressen der drei Schichten bei 180°C und Abkühlen bei 50 bar hergestellt.

Diese Verbundplatte hat zwar den Vorteil guter Verbundfestigkeit beim Schlagen mit einem Hammer, ist jedoch nicht kratzfester als gewöhnliches Acrylglas. Die Steifigkeit ist im Vergleich mit Silikatglas bedeutend geringer.

JP 77-59,617 (17.05.1977) beschreibt ein Verbundsystem aus 50 Mikrometer dünnen Silikatglasfolien mit einer dazwischen liegenden photosensitiven Klebstoffschicht. Das Laminat lässt sich mit einer Schere schneiden. Die Steifigkeit des Verbundsystems ist gering.

In JP 79-96,541 (Tejin Ltd.; 31.07.1979) wird ein Verbundglas mit einer 0,03 mm dicken strahlenhärtbaren Klebstöffzwischenschicht auf Basis Polyvinylbutyral mit einem Gehalt an Glycidylmethacrylat beschrieben.

In DE 2 95.1 763 (Bridgestone, 03.07.1980) wird ein Automobilsicherheitsglas aus zwei Glasscheiben mit einer Zwischenschicht aus einem photohärtbaren Klebstoff, der ein Silan als Haftvermittler enthält, beschrieben.

Bei den Beispielen aus den zwei zuletzt genannten Patentschriften handelt es sich zwar um steife und gasdichte, jedoch aufgrund der dünnen Polymerzwischenschicht und des hohen Silikatglasanteils am Gesamtverbund, schwere Scheiben.

Die Hagelbeständigkeit von Silikatglas und PMMA ist im Vergleich zu schlagzähen Kunststoffen wie Polycarbonat für viele Anwendungen ungenügend. Polycarbonat ist zwar aufgrund seiner Schlagzähigkeit bedeutend hagelbeständiger, hat aber den Nachteil einer geringeren Witterungsbeständigkeit gegenüber PMMA und Silikatglas. Man findet daher zahlreiche Versuche, die Witterungsstabilität des PMMA mit der Schlagzähigkeit des Polycarbonats zu verbinden. Schlagzähe PMMA-Platten wurden aus extrudiertem PMMA mit einem Gehalt an schlagzähen kugelförmigen gummielastischen Partikeln hergestellt. Die gummielastischen Partikel enthalten eine weichmachendes Monomer, wie z.B. Butylacrylat, ein hochbrechendes Monomer zur Justierung des Brechungsindexes, wie z.B. Styrol und einen Vernetzer. Nachteil dieser Platten ist ihre gegenüber reinem PMMA durch den Aromatengehalt bedingte verschlechterte Witterungsstabilität und ein Verlust an Steifigkeit, die sich an dem geringeren E-Modul ablesen lässt. Eine ausreichende Hagelbeständigkeit bei guter Witterungsbeständigkeit und Steifigkeit lässt sich daher nur durch höhere Plattendicke und damit verbunden höheres Gewicht erreichen.

In Anbetracht des Standes der Technik war es nun Aufgabe der vorliegenden Erfindung, Verbundgläser mit verbessertem Eigenschaftsprofil zur Verfügung zu stellen. Insbesondere sollten sich die Verbundgläser durch:
⇒ eine möglichst hohe Hagelbeständigkeit,
⇒ eine möglichst hohe Witterungsbeständigkeit,
⇒ eine möglichst hohe Verbundfestigkeit,
⇒ eine möglichst hohe Steifigkeit,
⇒ eine möglichst hohe Gasdichtigkeit,
⇒ eine möglichst hohe Kratzfestigkeit,
⇒ eine möglichst hohe Chemikalienbeständigkeit,
⇒ eine möglichst hohe Schlagfestigkeit und
⇒ ein möglichst niedriges spezifisches Gewicht
auszeichnen.

Eine weitere Aufgabe der vorliegenden Erfindung bestand darin, Verfahren zur Herstellung der erfindungsgemäßen Verbundgläser sowie mögliche Einsatzgebiete für ihre Verwendung anzugeben.

Gelöst werden diese sowie weitere nicht explizit genannte Aufgaben, die jedoch aus den hierin einleitend diskutierten Zusammenhängen ohne weiteres ableitbar oder erschließbar sind, durch die Angabe einer polymerisierbaren Zusammensetzung mit allen Merkmalen des Patentanspruchs 1, die für die Herstellung von Verbundgläsern mit einem verbesserten Eigenschaftsprofil hervorragend geeignet sind. Zweckmäßige Abwandlungen der polymerisierbaren Zusammensetzung werden in den auf Anspruch 1 rückbezogenen Unteransprüchen unter Schutz gestellt. Die durch Polymerisation der erfindungsgemäßen Zusammensetzung erhältlichen Polymere und Verbundgläser werden in den Ansprüchen 17 bis 19 beschrieben, wohingegen sich die Verfahrensansprüche auf Verfahren zur Herstellung der erfindungsgemäßen Verbundgläser beziehen. Der Anspruch der Verwendungskategorie schützt eine bevorzugte Verwendung von den erfindungsgemäßen Verbundgläsern.

Dadurch, dass man eine polymerisierbare Zusammensetzung zur Verfügung stellt, welche durch:
a) Umsetzung von
   A) 0,5 bis 5 Gewichtsteilen mindestens einer Silicium-Verbindung der Formel (I):

      SiₘR¹R²ₒOᵣXₛ (I)

      wobei R¹ jeweils unabhängig voneinander einen Alkenyl- oder Cycloalkenylrest mit 2 bis 12 Kohlenstoffatomen bezeichnet, der eine oder mehrere Estergruppen aufweisen kann,
      R² jeweils unabhängig voneinander einen Alkyl- oder Cycloalkylrest mit 1 bis 12 Kohlenstoffatomen kennzeichnet,
      X jeweils unabhängig voneinander ein Halogenatom oder eine Alkoxygruppe mit 1 bis 6 Kohlenstoffatomen darstellt,
      m eine ganze Zahl größer gleich 1 ist,
      n eine ganze Zahl zwischen 1 und 2*m+1 ist,
      o eine ganze Zahl zwischen 0 und 2*m ist,
      r eine ganze Zahl zwischen 0 und m-1 ist,
      s eine ganze Zahl zwischen 1 und 2*m+1 ist, und
      wobei m, n, o und s der Beziehung (1) genügen: $n + o + s = 2 * m + 2$ mit
   B) 0,01 bis 2,0 Gewichtsteilen Wasser und
   C) 0 bis 4,0 Gewichtsteilen mindestens einer Säure;
   und
b) anschließende Zugabe von
   D)0,5 bis 5 Gewichtsteilen mindestens eines (Meth)acrylates der Formel (II) 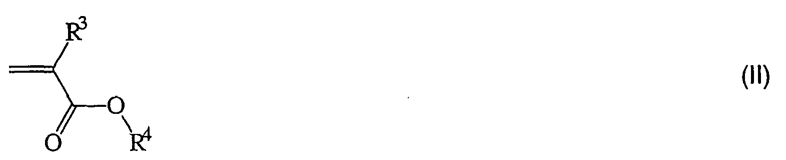 wobei R³ ein Wasserstoffatom oder eine Methylgruppe ist und R⁴ einen aliphatischen oder cycloaliphatischen Rest mit 1 bis 20 Kohlenstoffatomen bezeichnet, der mindestens eine Hydroxyl-, Thiol-, primäre Amino-, sekundäre Amino-, und/oder eine Epoxygruppe aufweist,
   E) 98,99 bis 55 Gewichtsteilen mindestens eines polymerisierbaren, von D) verschiedenen, ethylenisch ungesättigten Monomeren,
   F) 0 bis 30 Gewichtsteilen mindestens eines Polymers und/oder Copolymers, welches durch Polymerisation bzw. Copolymerisation mindestens eines ethylenisch ungesättigten Monomeren E) erhältlich ist,
erhältlich ist, gelingt es auf nicht ohne weiteres vorhersehbare Weise, eine polymerisierbare Zusammensetzung zugänglich zu machen, die für die Herstellung von Verbundgläsern mit verbessertem Eigenschaftsspektrum hervorragend geeignet ist. Die auf diese Weise erhältlichen Verbundgläser weisen eine bisher unbekannte Kombination herausragender Eigenschaften, wie eine hohe Hagelbeständigkeit, eine hohe Witterungsbeständigkeit, eine hohe Verbundfestigkeit, eine hohe Steifigkeit, eine hohe Gasdichtigkeit, eine hohe Kratzfestigkeit, eine hohe Schlagfestigkeit, eine hohe Chemikalienbeständigkeit und ein niedriges spezifisches Gewicht, auf.

Zugleich lassen sich unter Einsatz der erfindungsgemäßen Zusammensetzungen eine Reihe weiterer Vorteile erzielen. Hierzu gehören u. a.:
o Die durch die Polymerisation der erfindungsgemäßen Zusammensetzungen erhältlichen Polymere eignen sich besonders zur Bindung von Glas an Kunststoffoberflächen und ermöglichen in vielen Fällen Bindungen zwischen diesen, die stärker als das Glas selbst sind. Mit anderen Worten ist das Adhäsionsvermögen der Bindung zwischen dem Glas und dem Kunststoff häufig höher als die Kohäsionskraft des Glases selbst. Lässt man jedoch einen der erfindungsgemäßen Bestandteile aus der Rohstoffmischung, so ist die Haftung der Glasscheiben auf dem Kunststoff, insbesondere beim Schneiden und bei wechselnder thermischer Belastung, deutlich schlechter.
o Die Verwendung der erfindungsgemäßen Produkte ermöglicht, Kunststoffschichten mit sehr dünnen Glasscheiben zu beschichten, wobei die Adhäsionskraft der Bindung meist derart hoch ist, dass die Glasplatte zu einem integralen Bestandteil des Glasverbundes wird.
o Die durch die Polymerisation der erfindungsgemäßen Zusammensetzungen erhältlichen Polymere weisen eine derartig hohe Adhäsion an Glasoberflächen auf, dass sie in Verbundgläsern die durch Ausdehnen und Zusammenziehen der Glasplatten auftretende Spannungen und Belastungen, bedingt durch die verschiedenen Ausdehnungskoeffizienten von Glas und Kunststoff, aufnehmen können.
o Sogar bei einer Glasbeschichtung von nur 0,1 mm Dicke besitzen die glasbeschichteten Kunststoffschichten überraschend hohe Belastungswerte, die dem außerordentlich hohem Haftungsvermögen der erfindungsgemäßen Stoffmischungen bzw. der aus ihnen erhältlichen Polymerisate zuzuschreiben sind.
o Die erfindungsgemäßen Verbundgläser auf einfache Art und Weise, im industriellen Maßstab und kostengünstig herstellbar.
o Durch Verwendung der erfindungsgemäßen Produkte als adhäsive Schicht zwischen einer dünnen Glasfläche und einer Kunststoffplatte ist die Herstellung von Verbunden möglich, die überwiegend aus Kunststoff bestehen und infolgedessen die Grundeigenschaften des Kunststoffes haben, jedoch keine Mängel hinsichtlich Abnutzung durch Reibung und Gasdichtigkeit zeigen. Bei den Kunststoffplatten, die im Freien mangelhafte Wetterfestigkeit zeigen, steigert die Glasbeschichtung die Wetterfestigkeit um ein Mehrfaches. Das Heraustreten der Fasern an faserverstärkten Platten wird vollkommen verhütet, so dass die Lebensdauer solcher Platten wesentlich verlängert wird.

Die vorliegende Erfindung bezieht sich auf eine polymerisierbare Zusammensetzung. Eine "polymerisierbare Zusammensetzung" bezeichnet im Sinne der vorliegenden Erfindung eine Zusammensetzung, die eine oder mehrere Monomere enthält, welche durch im Stand der Technik bekannte Polymerisationsverfahren, wie beispielsweise radikalische, anionische und kationische Polymerisation, in hochmolekulare Verbindungen, sogenannte Polymere, überführt werden können. Diese weisen in Sinne der vorliegenden Erfindung einen Zahlenmittel des Polymerisationsgrades Pₙ von mindestens 10 auf. Für weitere Einzelheiten wird auf die Offenbarung von H. G. Elias, Makromoleküle, Band 1 und 2, Basel, Heidelberg, New York Hüthig und Wepf. 1990 und Ullmann's Encyclopedia of Industrial Chemistry, 5. Aufl., Stichwort "Polymerization Processes" verwiesen.

Erfindungsgemäß ist die polymerisierbare Zusammensetzung erhältlich, indem man in einem ersten Schritt
A) 0,5 bis 5 Gewichtsteilen mindestens einer Silicium-Verbindung der Formel (I):

   SiₘR¹ₙR²ₒOᵣXₛ (I)

   mit
B) 0,01 bis 2,0 Gewichtsteilen Wasser und
C) 0 bis 4,0 Gewichtsteilen, zweckmäßigerweise 0,01 bis 4,0 Gewichtsteilen, insbesondere 0,01 bis 2,0 Gewichtsteilen, mindestens einer Säure;
umsetzt.

Dabei bezeichnen die Reste R¹ jeweils unabhängig voneinander einen Alkenyl- oder Cycloalkenylrest mit 2 bis 12 Kohlenstoffatomen, die eine oder mehrere Estergruppen aufweisen können. Zu diesen Resten gehören u. a. Vinyl, Propen-(1)-yl, Propen-(2)-yl, Buten-(3)-yl, Penten-(4)-yl, Hexen-(5)-yl, Hepten-(6)-yl, Octen-(7)-yl, Nonen-(8)-yl, Decen-(9)-yl, Undecen-(10)-yl, Dodecen-(11)-yl, 2-Vinylcyclopentyl, 2-Vinylcyclohexyl, γ-Methacryloxyethyl, γ-Acryloxyethyl, γ-Methacryloxypropyl und γ-Acryloxypropyl sowie die bekannten Strukturisomere dieser Reste. Bevorzugte Reste im Sinne der vorliegenden Erfindung umfassen Vinyl, γ-Methacryloxyethyl, γ-Acryloxyethyl, γ-Methacryloxypropyl und γ-Acryloxypropyl, zweckmäßigerweise γ-Methacryloxyethyl, γ-Acryloxyethyl, γ-Methacryloxypropyl und γ-Acryloxypropyl, insbesondere γ-Methacryloxypropyl und γ-Acryloxypropyl. Dabei wird der γ-Methacryloxypropyl-Rest ganz besonders bevorzugt.

Die Reste R² stellen jeweils unabhängig voneinander einen Alkyl- oder Cycloalkylrest mit 1 bis 12 Kohlenstoffatomen, vorzugsweise 1 bis 6 Kohlenstoffatomen, insbesondere 1 bis 4 Kohlenstoffatomen, dar. Zu diesen Resten gehören u. a. Methyl, Ethyl, n-Propyl-, iso-Propyl, n-Butyl, iso-Butyl, tert.-Butyl, n-Pentyl, n-Hexyl, n-Heptyl, n-Octyl, n-Nonyl, N-Decyl, n-Undecyl, n-Dodecyl, Cyclopentyl und Cyclohexyl sowie die bekannten Strukturisomere dieser Reste.

Die Reste X bedeuten jeweils unabhängig voneinander ein Halogenatom, wie Fluor, Chlor, Brom oder lod, oder eine Alkoxygruppe mit 1 bis 6 Kohlenstoffatomen, wie beispielsweise eine Methoxy-, Ethoxy-, n-Propoxy-, iso-Propoxy-, n-Butoxy, sec-Butoxy-, tert.-Butoxy-, n-Pentoxy- oder n-Hexoxygruppe. Gemäß einer bevorzugten Ausführungsform der vorliegenden Erfindung kennzeichnet X jeweils unabhängig voneinander ein Chlor- oder ein Bromatom. Gemäß einer weiteren bevorzugten Ausführungsform der vorliegenden Erfindung stellt X jeweils unabhängig voneinander eine Alkoxygruppe mit 1 bis 6 Kohlenstoffatomen, vorzugsweise 1 bis 4 Kohlenstoffatomenen, insbesondere 1 bis 2 Kohlenstoffatomen, dar.

Der Index m kennzeichnet eine ganze Zahl größer gleich 1, zweckmäßigerweise im Bereich von 1 bis 10, vorzugsweise im Bereich von 1 bis 6, insbesondere im Bereich von 1 bis 4, d. h. 1, 2, 3 oder 4. Ganz besonders vorteilhafte Ergebnisse werden für m = 1 erzielt.

Der Index n ist eine ganze Zahl zwischen 1 und 2*m+1, zweckmäßigerweise 1 oder 2, insbesondere 1.

Der Index o ist eine ganze Zahl zwischen 0 und 2*m, zweckmäßigerweise zwischen 0 und 20, vorzugsweise zwischen 0 und 2, insbesondere 0.

Der Index r ist eine ganze Zahl zwischen 0 und m-1, zweckmäßigerweise zwischen 0 und 9, vorzugsweise zwischen 0 und 3, insbesondere 0.

Der Index s ist eine ganze Zahl zwischen 1 und 2*m+1, zweckmäßigerweise zwischen 1 und 21, vorzugsweise zwischen 1 und 13, insbesondere zwischen 1 und 9. Ganz besonders vorteilhafte Ergebnisse werden für s = 3 erzielt.

Dabei müssen die Indizes m, n, o und s der Beziehung (1) genügen: $n + o + s = 2 * m + 2$

Im Rahmen einer bevorzugten Ausführungsform der vorliegenden Erfindung ist die erfindungsgemäße Zusammensetzung erhältlich, indem man mindestens eine Silicium-Verbindung der Formel (Ia)

SiR¹ₙXₛ (Ia)

als Silicium-Verbindung A) einsetzt. Dabei ist n eine ganze Zahl zwischen 1 und 3 und s = 4 - n. Silicium-Verbindungen der Formel (Ia) umfassen somit SiR¹X₃, SiR¹₂X₂ und SiR¹₃X.

Im Rahmen einer weiteren bevorzugten Ausführungsform der vorliegenden Erfindung ist die erfindungsgemäße Zusammensetzung erhältlich, indem man eine Mischung enthaltend mindestens eine Silicium-Verbindung der Formel (Ia)

SiR¹ₙXₛ (Ia)

und mindestens eine Silicium-Verbindung der Formel (Ib)

SiR²ₒXₛ (Ib)

an Stelle der Silicium-Verbindung A) einsetzt. Dabei ist in Formel (Ia) n eine ganze Zahl zwischen 1 und 3 und s = 4 - n. In Formel (Ib) ist o eine ganze Zahl zwischen 1 und 3 und s = 4 - o. Verbindungen der Formel (Ib) umfassen somit SiR²X₃, SiR²₂X₂ und SiR²₃X, insbesondere Alkyltrialkoxysilane, Dialkyldialkoxysilane, Trialkylalkoxysilane, Alkylsilyltrihalogenide, Dialkylsilyldihalogenide und Trialkylsilylhalogenide. Zu den erfindungsgemäß besonders bevorzugten Verbindungen der Formel (Ib) gehören Trichloromethylsilan, Dichlorodimethylsilan, Chlorotrimethylsilan, Tribromomethylsilan, Dibromodimethylsilan, Bromotrimethylsilan, Trichloroethylsilan, Dichlorodiethylsilan, Chlorotriethylsilan, Tribromoethylsilan, Dibromodiethylsilan, Bromotriethylsilan, Trimethoxymethylsilan, Dimethoxydimethylsilan, Methoxytrimethylsilan, Triethoxymethylsilan, Diethoxydimethylsilan, Ethoxytrimethylsilan, Trimethoxyethylsilan, Dimethoxydiethylsilan, Methoxytriethylsilan, Triethoxymethylsilan, Diethoxydimethylsilan und Ethoxytrimethylsilan.

Erfindungsgemäß besonders günstige Ergebnisse werden unter Verwendung von einer oder mehrerer Silicium-Verbindungen der Formel (Ic) 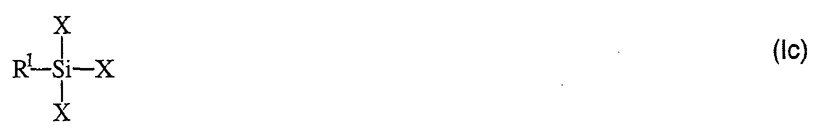 als Silicium-Verbindung A) erhalten. Dabei hat sich insbesondere der Einsatz von Vinyltrimethoxysilan, γ-Methacryloxyethyl-trimethoxysilan, γ-Acryloxyethyltrimethoxysilan, γ-Methacryloxypropyl-trimethoxysilan, γ-Acryloxypropyltrimethoxysilan, Vinyltriethoxysilan, γ-Methacryloxyethyl-triethoxysilan, γ-Acryloxyethyltriethoxysilan, γ-Methacryloxypropyl-triethoxysilan, γ-Acryloxypropyl-triethoxysilan, Vinyltrichlorosilan, γ-Methacryloxyethyl-trichlorosilan, γ-Acryloxyethyl-trichlorosilan, γ-Methacryloxypropyl-trichlorosilan, γ-Acryloxypropyl-trichlorosilan, Vinyltribromosilan, γ-Methacryloxyethyl-tribromosilan, γ-Acryloxyethyl-tribromosila γ-Methacryloxypropyltribromosilan und/oder γ-Acryloxypropyl-tribromosilan besonders bewährt.

Ganz besonders geeignete Silicium-Verbindungen der Formel (Ic) umfassen die Verbindungen γ-Methacryloxypropyl-triethoxysilan, γ-Acryloxypropyl-triethoxysilan, γ-Methacryloxypropyl-trimethoxysilan, γ-Acryloxypropyl-trimethoxysilan und/oder Vinyltriethoxysilan, insbesondere γ-Methacryloxypropyl-triethoxysilan.

Die Silicium-Verbindung A) kann einzeln oder auch als Mischung zweier oder mehrerer Silicium-Verbindungen A) eingesetzt werden.

Säuren im Sinne der Erfindung umfassen alle bekannten anorganischen und organischen Bronsted-Säuren, vorzugsweise organische Brønsted-Säuren. Weiterhin ist auch der Einsatz von Polysäuren möglich, insbesondere von Isopolysäuren und Heteropolysäuren sowie von Mischungen verschiedener Säuren. Erfindungsgemäß einsetzbare Säuren umfassen u. a. HF, HCl, HBr, Hl, H₂SO₄, H₂SO₃, H₃PO₄, Ameisensäure, Essigsäure, Propionsäure, Buttersäure, Pentansäure, Hexansäure, Zitronensäure, Methacrylsäure und Acrylsäure. Dabei wird die Verwendung von ethylenisch ungesättigten, organischen Säuren, insbesondere von Methacrylsäure und Acrylsäure, erfindungsgemäß besonders bevorzugt, weil diese im Zuge der Polymerisation der Zusammensetzung ebenfalls copolymerisiert werden. Die erfindungsgemäßen Säuren sind vorzugsweise in Wasser löslich, zweckmäßigerweise weisen sie eine Wasserlöslichkeit > 10 g/l bei 20°C auf. Die Säuremenge wird erfindungsgemäß vorzugsweise derart gewählt, dass der pH der Lösung aus den Komponenten B) und C) vorzugsweise im Bereich 1 bis <7, insbesondere im Bereich 4,0 bis 6,0, bei 20°C liegt.

Obwohl das Reaktionsprodukt der Umsetzung a) derzeit nicht genau spezifiziert werden kann, wird derzeitig davon ausgegangen, dass die Silicium-Verbindungen der Formel (I) durch das Wasser zumindest teilweise hydrolysiert wird. Diese Hydrolyse führt vermutlich zu höher kondensierten Produkten, die gegebenenfalls verzweigende und verbrückende Gruppen der Formel (Id) 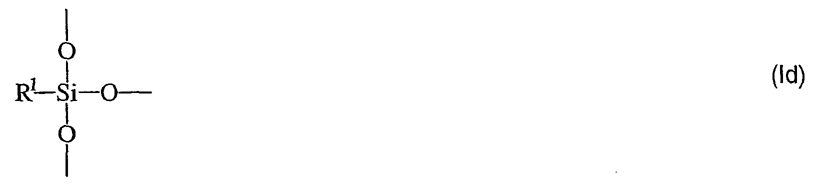 aufweisen.

Weiterhin wird davon ausgegangen, dass auch die Acryl- und/oder Methacrylsäurefalls vorhanden - mit den Silicium-Hydrolysat zumindest teilweise kondensiert. In diesem Zusammenhang ist jedoch zu beachten, dass die Lehre der vorliegenden Erfindung in keiner Weise an die Gültigkeit der vorstehenden Interpretation geknüpft ist.

Die Wassermenge beträgt vorzugsweise 0,1 bis 3,0 mol, zweckmäßigerweise 2,0 bis 3,0 mol, insbesondere 2,8 bis 3,0 pro mol Silicium-Verbindungen der Formel (I).

Die Durchführung der Umsetzung kann auf konventionelle Weise, vorzugsweise unter Rühren, erfolgen. Dabei kann man die Reaktionstemperatur über einen weiten Bereich variiert werden, aber häufig liegt die Temperatur im Bereich von 0,0 °C bis 100,0 °C, vorzugsweise im Bereich von 10,0 °C bis 60,0 °C, insbesondere im Bereich von 20°C bis 30°C. Ähnliches gilt für den Druck bei der die Umsetzung vollzogen wird. So kann die Reaktion sowohl bei Unterdruck als auch bei Überdruck stattfinden. Vorzugsweise wird sie aber bei Normaldruck durchgeführt. Die Reaktion kann unter Luft als auch unter Schutzgasatmosphäre, wie beispielsweise unter Stickstoff- oder Argonatmosphäre, stattfinden, wobei vorzugsweise ein geringer Sauerstoffanteil vorhanden ist.

Der Endpunkt der Umsetzung lässt sich häufig daran erkennen, dass die ursprünglich vorhandene zweite Phase (Wasser) verschwunden ist und eine homogene Phase entsteht. Dabei ist die Hydrolysezeit im allgemeinen temperaturabhängig. Bei höherer Temperatur geht die Hydrolyse schneller als bei niedriger Temperatur vonstatten. Bei einer Temperatur von 22°C wird eine homogene Phase im allgemeinen bereits nach 30 min gebildet. Eine höhere Temperatur, z.B. 30°C, bewirkt in der Regel, dass sich schon nach 15 min eine homogene Phase bildet. Umgekehrt dauert die Hydrolyse bei tieferen Temperaturen entsprechend länger. Es ist vorteilhaft, wenn die hydrolysierte Mischung nach der Hydrolyse und Ausbildung einer einzigen Phase noch eine Zeit lang steht oder gerührt wird, um die Vollständigkeit der Hydrolyse sicher zu stellen. Um Zeit zu sparen, kann man die hydrolysierte Mischung aber auch bereits nach Ausbildung einer einheitlichen Phase mit dem Rest der Komponenten vermischen und polymerisieren. Bei sehr langen Standzeiten nach der Hydrolyse von einigen Stunden bis zu mehreren Tagen, je nach Reaktionstemperatur, setzt unter Umständen eine Kondensation der Silanole ein.

Im Rahmen der vorliegenden Erfindung wird die Umsetzung a) zweckmäßigerweise solange durchführt, bis man eine homogene Lösung erhält. Reaktionszeiten im Bereich von 1 Minute bis 48 Stunden, zweckmäßigerweise im Bereich von 15 Minuten bis 48 Stunden, insbesondere im Bereich von 30 Minuten bis 4 Stunden, haben sich in diesem Zusammenhang ganz besonders bewährt.

Erfindungsgemäß erfolgt nach der Umsetzung a) in einem zweiten Schritt b) die Zugabe von
D)0,5 bis 5 Gewichtsteilen mindestens eines (Meth)acrylates der Formel (II) 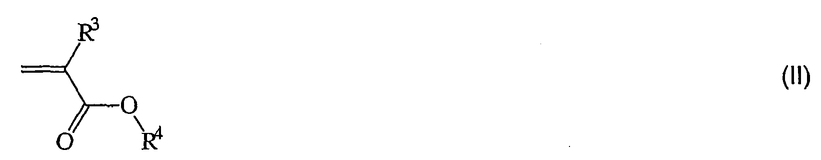
E) 98,99 bis 55 Gewichtsteilen mindestens eines polymerisierbaren, von D) verschiedenen, ethylenisch ungesättigten Monomeren,
F) 0 bis 30 Gewichtsteilen mindestens eines Polymers und/oder Copolymers, welches durch Polymerisation bzw. Copolymerisation mindestens eines ethylenisch ungesättigten Monomeren E) erhältlich ist.

Erfindungsgemäß umfasst der Ausdruck (Meth)acrylat Methacrylate und Acrylate sowie Mischungen aus beiden.

R³ ist ein Wasserstoffatom oder eine Methylgruppe. R⁴ bezeichnet einen aliphatischen oder cycloaliphatischen Rest mit 1 bis 20 Kohlenstoffatomen, vorzugsweise 1 bis 12 Kohlenstoffatomen, insbesondere 2 bis 6 Kohlenstoffatomen, der mindestens eine Hydroxyl-, Thiol-, primäre Amino-, sekundäre Amino-, und/oder eine Epoxygruppe aufweist.

Zu den erfindungsgemäß einsetzbaren (Meth)acrylaten D) gehören u. a. Hydroxyalkyl(meth)acrylate, wie 3-Hydroxypropyl(meth)acrylat, 3,4-Dihydroxybutyl(meth)acrylat, 2-Hydroxyethyl(meth)acrylat, 2-Hydroxypropyl(meth)acrylat, 2,5-Dimethyl-1,6-hexandiol(meth)acrylat, 1,10-Decandiol(meth)acrylat und 1,2-Propandiol(meth)acrylat;
Polyoxyethylen- und Polyoxypropylen-Derivate der (Meth)acrylsäure, wie Triethylenglykol(meth)acrylat, Tetraethylenglykol(meth)acrylat und Tetrapropylenglykol(meth)acrylat;
Aminoalkyl(meth)acrylate, wie 2-[N,N-Dimethylamino]-ethyl(meth)acrylat, 3-[N,N-Dimethylamino]-propyl(meth)acrylat und 2-(4-Morpholinyl)ethyl(meth)acrylat;
Oxiranyl(meth)acrylate, wie 2,3-Epoxybutyl(meth)acrylat,
3,4-Epoxybutyl(meth)acrylat und Glycidyl(meth)acrylat;
Mercaptoalkyl(meth)acrylate, wie 2-Mercaptoethyl(meth)acrylat und 3-Mercaptopropyl(meth)acrylat;

Im Rahmen der vorliegenden Erfindung bevorzugte (Meth)acrylate D) umfassen Hydroxylalkyl(meth)acrylate, Aminoalkyl(meth)acrylate, Oxiranyl(meth)acrylate und Mercaptoalkyl(meth)acrylate, insbesondere Glycidyl(meth)acrylat. Diese werden vorzugweise mit einem Gewichtsanteil >50 Gew.-%, zweckmäßigerweise > 75 Gew.-%, insbesondere > 95 Gew.-%, bezogen auf alle (Meth)acrylate D) eingesetzt.

Im Rahmen der vorliegenden Erfindung führt insbesondere die Kombination von Glycidylmethacrylat (als (Meth)acrylate D) mit γ-Methacryloxypropyl-trimethoxysilan (als Silicium-Verbindung A)) zu einer ganz besonderen Verbesserung der Beständigkeit der aus den betreffenden Zusammensetzungen erhältlichen Verbundgläsern gegenüber raschen Temperaturwechseln und der Haftfestigkeit sowie der Verbundfestigkeit bei mechanischer Belastung, wie sie zum Beispiel beim Sägen oder mechanischen Bearbeiten einer Verbundscheibe auftritt.

Die Gesamtmenge an (Meth)acrylaten D) darf erfindungsgemäß 5 Gewichtsteile nicht übersteigen, da sonst ungünstige Einflüsse im durch Polymerisation der Zusammensetzung erhältlichen Polymer auftreten können, wie beispielsweise eine verstärkte Wasserquellbarkeit im Falle der Verwendung von Hydroxyalkyl(meth)acrylaten oder eine deutliche Vergilbung im Falle der Verwendung von substituierten aminogruppenhaltigen (Meth)acrylaten.

Die von D) verschiedenen, ethylenisch ungesättigten Monomere E) sind dem Fachmann bestens bekannt, sie umfassen alle die von D) verschiedenen, organischen Verbindungen, die mindestens eine ethylenisch Doppelbindung aufweisen. Hierzu gehören unter anderem:
Nitrile der (Meth)acrylsäure und andere stickstoffhaltige Methacrylate, wie Methacryloylamidoacetonitril, 2-Methacryloyloxyethylmethylcyanamid, Cyanomethylmethacrylat;
(Meth)acrylate, die sich von gesättigten Alkoholen ableiten, wie Methyl(meth)acrylat, Ethyl(meth)acrylat, n-Propyl(meth)acrylat, iso-Propyl(meth)acrylat, n-Butyl(meth)acrylat, sec-Butyl(meth)acrylat, tert-Butyl(meth)acrylat, Pentyl(meth)acrylat, Hexyl(meth)acrylat, Heptyl(meth)acrylat, 2-Ethylhexyl(meth)acrylat, Octyl(meth)acrylat, Nonyl(meth)acrylat, isoOctyl(meth)acrylat, iso-Nonyl(meth)acrylat, 2-tert.-Butylheptyl(meth)acrylat, 3-iso-Propylheptyl(meth)acrylat, Decyl(meth)acrylat, Undecyl(meth)acrylat, 5-Methylundecyl(meth)acrylat, Dodecyl(meth)acrylat, 2-Methyldodecyl(meth)acrylat, Tridecyl(meth)acrylat, 5-Methyltridecyl(meth)acrylat, Tetradecyl(meth)acrylat, Pentadecyl(meth)acrylat, Hexadecyl(meth)acrylat, 2-Methylhexadecyl(meth)acrylat, Heptadecyl(meth)acrylat, 5-iso-Propylheptadecyl(meth)acrylat, 4-tert.-Butyloctadecyl(meth)acrylat, 5-Ethyloctadecyl(meth)acrylat, 3-iso-Propyloctadecyl(meth)acrylat, Octadecyl(meth)acrylat, Nonadecyl(meth)acrylat, Eicosyl(meth)acrylat, Cetyleicosyl(meth)acrylat, Stearyleicosyl(meth)acrylat, Docosyl(meth)acrylat und/oder Eicosyltetratriacontyl(meth)acrylat;
Cycloalkyl(meth)acrylate, wie Cyclopentyl(meth)acrylat, Cyclohexyl(meth)acrylat, 3-Vinyl-2-butyl-cyclohexyl(meth)acrylat und Bornyl(meth)acrylat;
(Meth)acrylate, die sich von ungesättigten Alkoholen ableiten, wie 2-Propinyl(meth)acrylat, Allyl(meth)acrylat, Oleyl(meth)acrylat und Vinyl(meth)acrylat;
Aryl(meth)acrylate, wie Benzyl(meth)acrylat oder Phenyl(meth)acrylat, wobei die Arylreste jeweils unsubstituiert oder bis zu vierfach substituiert sein können;
Di(meth)acrylate, wie 1,2-Ethandioldi(meth)acrylat, 1,4-Butandioldi(meth)acrylat, Diethylenglykoldi(meth)acrylat, Dipropylenglykoldi(meth)acrylat, Triethylenglykoldi(meth)acrylat, Tripropylenglykoldi(meth)acrylat, Tetraethylenglykoldi(meth)acrylat, Tetrapropylengfykoldi(meth)acrylat, Polyethylenglykoldi(meth)acrylat (vorzugsweise mit einem Gewichtsmittel des Molekulargewichtes im Bereich von 200 - 5000000 g/mol, zweckmäßigerweise im Bereich von 200 bis 25000 g/mol, insbesondere im Bereich von 200 bis 1000 g/mol), Polypropylenglykoldi(meth)acrylat (vorzugsweise mit einem Gewichtsmittel des Molekulargewichtes im Bereich von 200 - 5000000 g/mol, zweckmäßigerweise im Bereich von 250 bis 4000 g/mol, insbesondere im Bereich von 250 bis 1000 g/mol), 2,2'-Thiodiethanoldi(meth)acrylat (Thiodiglykoldi(meth)acrylat), 3,9-Di(meth)acryloyloxymethyltricydo[5.2.1.0(2.6)]decan, insbesondere 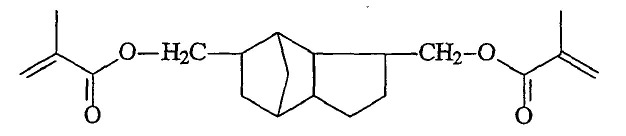 3,8-Di(meth)acryloyloxymethyltricyclo[5.2.1.0(2.6)]decan, 4,8-Di(meth)acryloyloxymethyltricyclo[5.2.1.0(2.6)]decan, 4,9-Di(meth)acryloyloxymethyltricyclo[5.2.1.0(2.6)]decan, ethoxyliertes Bisphenol A-Di(meth)acrylat, insbesondere 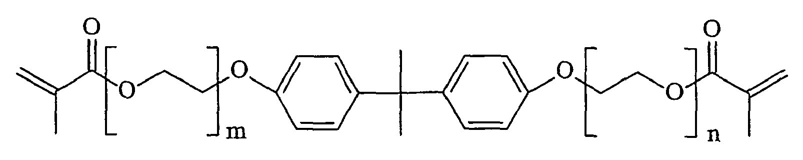 wobei m und n größer gleich null sind und die Summe m + n vorzugsweise im Bereich von 1 bis 3, insbesondere im Bereich von 1,5 bis 2,5 liegt, und durch Umsetzung von Diisocyanaten mit 2 Äquivalenten Hydroxyalkyl(meth)acrylat erhältliche Di(meth)acrylate, insbesondere 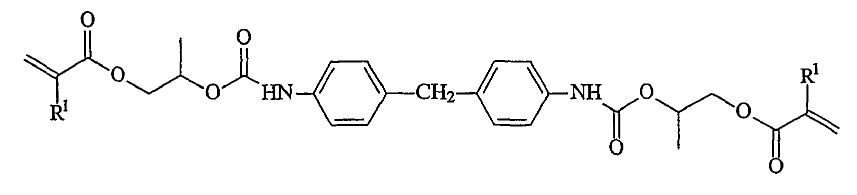 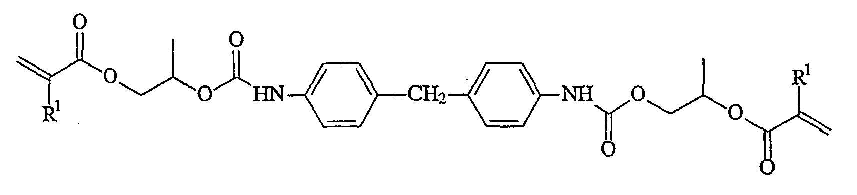 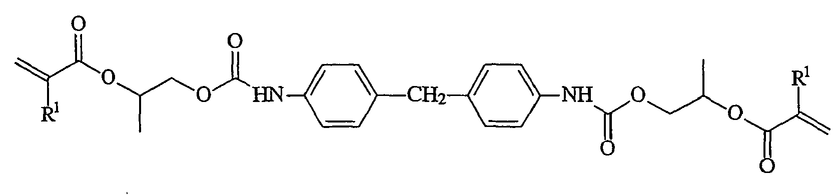 wobei der Rest R¹ jeweils unabhängig voneinander Wasserstoff oder einen Methylrest bedeutet;
carbonylhaltige (Meth)acrylate, wie 2-Carboxyethyl(meth)acrylat, Carboxymethyl(meth)acrylat, Oxazolidinylethyl(meth)acrylat, N-(Methacryloyloxy)formamid, Acetonyl(meth)acrylat und N-Methacryloyl-2-pyrrolidinon;
(Meth)acrylate von Etheralkoholen, wie Tetrahydrofurfuryl(meth)acrylat, Vinyloxyethoxyethyl(meth)acrylat, Methoxyethoxyethyl(meth)acrylat, 1-Butoxypropyl(meth)acrylat, 1-Methyl-(2-vinyloxy)ethyl(meth)acrylat, Cyclohexyloxymethyl(meth)acrylat, Methoxymethoxyethyl(meth)acrylat, Benzyloxymethyl(meth)acrylat, Furfuryl(meth)acrylat, 2-Butoxyethyl(meth)acrylat, 2-Ethoxyethoxymethyl(meth)acrylat, 2-Ethoxyethyl(meth)acrylat, Allyloxymethyl(meth)acrylat, 1-Ethoxybutyl(meth)acrylat, Methoxymethyl(meth)acrylat, 1-Ethoxyethyl(meth)acrylat und Ethoxymethyl(meth)acrylat;
(Meth)acrylate von halogenierten Alkoholen, wie 2,3-Dibromopropyl(meth)acrylat, 4-Bromophenyl(meth)acrylat, 1,3-Dichloro-2-propyl(meth)acrylat, 2-Bromoethyl(meth)acrylat, 2-lodoethyl(meth)acrylat und Chloromethyl(meth)acrylat;
Amide der (Meth)acrylsäure, wie N-(3-Dimethylaminopropyl)(meth)acrylamid, N-(Diethylphosphono)(meth)acrylamid, 1-(Meth)acryloylamido-2-methyl-2-propanol, N-(3-Dibutylaminopropyl)(meth)acrylamid, N-t-Butyl-N-(diethylphosphono)(meth)acrylamid, N,N-bis(2-Diethylaminoethyl)(meth)acrylamid, 4-(Meth)acryloylamido-4-methyl-2-pentanol, N-(Methoxymethyl)(meth)acrylamid, N-(2-Hydroxyethyl)(meth)acrylamid, N-Acetyl(meth)acrylamid, N-(Dimethylaminoethyl)(meth)acrylamid, N-Methyl-N-phenyl(meth)acrylamid, N,N-Diethyl(meth)acrylamid, N-Methyl(meth)acrylamid, N,N-Dimethyl(meth)acrylamid und N-Isopropyl(meth)acrylamid;
heterocyclische (Meth)acrylate, wie 2-(1-Imidazolyl)ethyl(meth)acrylat und 1-(2-Methacryloyloxyethyl)-2-pyrrolidon;
Phosphor-, Bor- und/oder Silicium-haltige (Meth)acrylate, wie 2-(Dimethylphosphato)propyl(meth)acrylat, 2-(Ethylenphosphito)propyl(meth)acrylat, Dimethylphosphinomethyl(meth)acrylat, Dimethylphosphonoethyl(meth)acrylat, Diethyl(meth)acryloylphosphonat und Dipropyl(meth)acryloylphosphat;
schwefelhaltige (Meth)acrylate, wie Ethylsulfinylethyl(meth)acrylat, 4-Thiocyanatobutyl(meth)acrylat, Ethylsulfonylethyl(meth)acrylat, Thiocyanatomethyl(meth)acrylat, Methylsulfinylmethyl(meth)acrylat und Bis((meth)acryloyloxyethyl)sulfid;
Tri(meth)acrylate, wie Trimethyloylpropantri(meth)acrylat und Glycerintri(meth)acrylat;
Bis(allylcarbonate), wie Ethylenglykol-bis(allylcarbonat), 1,4-Butandiol-bis(allylcarbonat), Diethylenglykol-bis(allylcarbonat);
Vinylhalogenide, wie beispielsweise Vinylchlorid, Vinylfluorid, Vinylidenchlorid und Vinylidenfluorid;
Vinylester, wie Vinylacetat;
Styrol, substituierte Styrole mit einem Alkylsubstituenten in der Seitenkette, wie z. B. α-Methylstyrol und α-Ethylstyrol, substituierte Styrole mit einem Alkylsubstituenten am Ring, wie Vinyltoluol und p-Methylstyrol, halogenierte Styrole, wie beispielsweise Monochlorstyrole, Dichlorstyrole, Tribromstyrole und Tetrabromstyrole;
Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;
Vinyl- und Isoprenylether;
Maleinsäure und Maleinsäurederivate, wie beispielsweise Mono- und Diester der Maleinsäure, wobei die Alkoholreste 1 bis 9 Kohlenstoffatome aufweisen, Maleinsäureanhydrid, Methylmaleinsäureanhydrid, Maleinimid, Methylmaleinimid;
Fumarsäure und Fumarsäurederivate, wie beispielsweise Mono- und Diester der Fumarsäure, wobei die Alkoholreste 1 bis 9 Kohlenstoffatome aufweisen;
sowie Diene, wie beispielsweise 1,2-Divinylbenzol, 1,3-Divinylbenzol, 1,4-Divinylbenzol, 1,2-Diisopropenylbenzol, 1,3-Diisopropenylbenzol und 1,4-Diisopropenylbenzol.

Erfindungsgemäß besonders vorteilhafte Ergebnisse können erzielt werden, indem man zu mindestens 50 Gew.-%, vorzugsweise zu mindestens 70 Gew.%, zweckmäßigerweise zu mindestens 80 Gew.-%, insbesondere zu mindestens 90 Gew.-%, bezogen auf die Gesamtmenge an ethylenisch ungesättigten Monomeren E) mindestens ein (Meth)acrylat der Formel (III) als ethylenisch ungesättigtes Monomer E) einsetzt 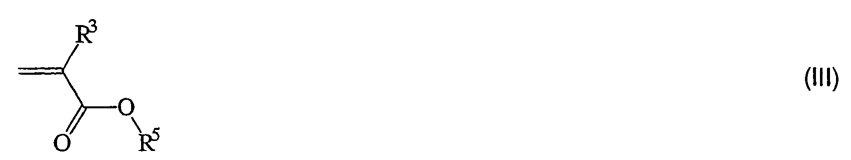 In diesem Zusammenhang stellt R³ ein Wasserstoffatom oder eine Methylgruppe, vorzugsweise eine Methylgruppe, dar und R⁵ bezeichnet einen aliphatischen oder cycloaliphatischen Rest mit 1 bis 20 Kohlenstoffatomen, zweckmäßigerweise 1 bis 8 Kohlenstoffatomen, insbesondere 1 bis 4 Kohlenstoffatomen, bezeichnet. Hierbei besonders bevorzugte (Meth)acrylate umfassen Methyl(meth)acrylat, Ethyl(meth)acrylat, Propyl(meth)acrylat und Butyl(meth)acrylat, insbesondere Methylmethacrylat.

Erfindungsgemäß ist es weiterhin möglich, der Zusammensetzung ein oder mehrere Polymere und/oder Copolymere F) beizumischen, um beispielsweise die Viskosität zu erhöhen und damit die Verarbeitbarkeit der erfindungsgemäßen Zusammensetzung zu verbessern. Die in diesem Zusammenhang einsetzbaren Polymere und Copolymere leiten sich von den vorstehend genannten ethylenisch ungesättigten Monomeren E) ab und sind durch Polymerisation bzw. Copolymerisation mindestens eines der vorstehend genannten ethylenisch ungesättigten Monomere E) erhältlich. Die Polymerisation erfolgt vorzugsweise radikalisch, insbesondere unter Verwendung mindestens eines der nachstehend genannten radikalischen Polymerisationsinitiatoren.

Erfindungsgemäß besonders bevorzugte Polymere und Copolymere sind durch Polymerisation bzw. Copolymerisation von ethylenisch ungesättigten Monomeren E) erhältlich, welche zu mindestens 50 Gew.-%, vorzugsweise zu mindestens 70 Gew.-%, zweckmäßigerweise zu mindestens 80 Gew.-%, insbesondere zu mindestens 90 Gew.-%, bezogen auf die Gesamtmenge an ethylenisch ungesättigten Monomeren E) mindestens ein (Meth)acrylat der Formel (III) als ethylenisch ungesättigtes Monomer E) enthalten.

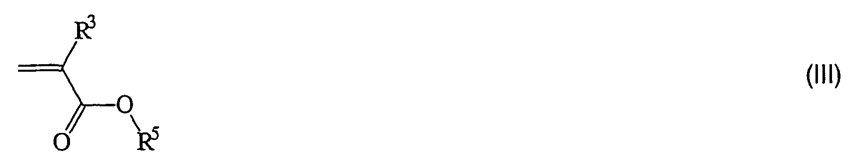

Auch in diesem Zusammenhang stellt R³ ein Wasserstoffatom oder eine Methylgruppe, vorzugsweise eine Methylgruppe, dar und R⁵ bezeichnet einen aliphatischen oder cycloaliphatischen Rest mit 1 bis 20 Kohlenstoffatomen, zweckmäßigerweise 1 bis 8 Kohlenstoffatomen, insbesondere 1 bis 4 Kohlenstoffatomen, bezeichnet. Hierbei besonders bevorzugte (Meth)acrylate umfassen Methyl(meth)acrylat, Ethyl(meth)acrylat, Propyl(meth)acrylat und Butyl(meth)acrylat, insbesondere Methylmethacrylat.

Zweckmäßigerweise sind die Polymere und/oder Copolymere F) in der erfindungsgemäßen Zusammensetzung löslich und mit ihr sowie dem polymeriserten Gemisch verträglich. Vorher hergestellte Polymerisate und/oder Copolymerisate, die in dem monomeren Gemisch löslich sind und sich mit ihm, jedoch nicht mit dem polymeriserten Gemisch vertragen, liefern durchscheinende polymere Stoffgemische. Diese sind vom dekorativen Standpunkt aus häufig vorteilhaft.

Das Molekulargewicht der Polymere und/oder Copolymere F) kann je nach gewünschten Eigenschaftsprofil gewählt werden. Es hat sich jedoch als überaus günstig erwiesen, Polymere und/oder Copolymere mit einem Zahlenmittel des Molekulargewichts im Bereich von 1000 g/mol bis 1 000 000 000 g/mol, insbesondere im Bereich 10 000 g/mol bis 500 000 g/mol einzusetzen. Dabei wird das Zahlenmittel des Molekulargewichts vorzugsweise mittels Größenausschlußchromatographie (GPC) unter Verwendung von linearem Polystyrol als internem Standard ermittelt.

Im Rahmen einer ganz besonders bevorzugten Ausführungsform der vorliegenden Erfindung werden als Polymere und/oder Copolymere F) Schlagzähmodifizierer, insbesondere Kern-Schale oder Kern-Schale 1-Schale 2-Teilchen, eingesetzt.

Dabei haben sich insbesondere die für Gußglas geeigneten Schlagzähmodifizierer, welche in der Druckschrift DE 102 035 65.2 beschrieben werden als besonders vorteilhaft erwiesen. Diese haben vorzugsweise die folgende Zusammensetzung

| | | |
|---|---|---|
| Kern: | 94- 97 Gew.-% | Methylmethacrylat |
| | 2 - 5 Gew.-% | Ethylacrylat |
| | 1 - 0,1 Gew.-% | Vernetzer |
| Schale 1: | 79 - 82 Gew.-% | Butylacrylat |
| | 13 - 18 Gew.-% | Styrol oder α-Methylstyrol |
| | 0,1 - 1 Gew.-% | Vernetzer |
| Schale 2: | 90 - 98 Gew.-% | Methylmethacrylat |
| | 10-2 Gew.-% | Ethylacrylat |

Als Vernetzer im Schlagzähmodifizierer (Kern oder Schale 1) können beispielsweise Di(meth)acrylate, Divinylbenzole oder Allyl(meth)acrylate eingesetzt werden. Auch Mischungen der Vernetzerkomponenten sind möglich. Das Gewichtsverhältnis von Kern : Schale 1 : Schale 2 beträgt vorzugsweise zwischen 20 - 30 : 30 - 50 : 20 - 40 Gew.-%. Schlagzähmodifizierer und ihre Herstellung werden beispielsweise in der EP 0 828 772, US, 3,793,402 oder 4,690,986 beschrieben. Für weitere Details wird auf die Offenbarung der vorstehend genannten Druckschriften, insbesondere auf DE 102 035 65.2, verwiesen. Der Anteil der Schlagzähmodifizierer beträgt vorzugsweise 1 bis 100 Gew.-% bezogen auf das Gesamtgewicht der Polymere und/oder Copolymere F). Bezogen auf die erfindungsgemäße Zusammensetzung beträgt der Anteil der Schlagzähmodifizierer vorzugsweise 0,5 bis 30 Gew.-%.

In diesem Zusammenhang hat es sich weiterhin als ganz besonders günstig erwiesen, der erfindungsgemäßen Zusammensetzung 0,1 bis 10 Gewichtsteile mindestens eines Schlagzähmodifizierers und 29,9 bis 20 Gewichtsteile mindestens eines linearen oder verzweigten Polymers und/oder Copolymers als Polymer und/oder Copolymer F) beizumischen. Lineare oder verzweigte Polymere und/oder Copolymere bezeichnen in diesem Zusammenhang Polymere und/oder Copolymere, welche durch einstufige, vorzugsweise radikalische, kationische oder anionische, Polymerisation, insbesondere in Substanz, erhältlich sind.

Die Herstellung der Polymere und/oder Copolymere F) kann auf konventionelle Art und Weise, beispielsweise via radikalische, anionische oder kationische Polymerisation erfolgen. Dabei können die bekannten Polymerisationsverfahren, wie Emulsions-, Substanz-, Masse- oder Lösungspolymerisation, eingesetzt werden. Dabei sind sowohl ein- als auch mehrstufige Polymerisationsverfahren denkbar, wie beispielsweise eine mehrstufige Emulsionspolymerisation, die zu den bekannten Kern-Schale-Teilchen führt, welche beispielsweise häufig als Schlagzähmodifizierer von Formmassen eingesetzt werden. Für weitere Details wird auf die Fachliteratur, insbesondere auf H. G. Elias, Makromoleküle, Band 1 und 2, Basel, Heidelberg, New York Hüthig und Wepf. 1990 und Ullmann's Encyclopedia of Industrial Chemistry, 5. Aufl., Stichwort "Polymerization Processes" verwiesen.

Im Rahmen einer ganz besonders bevorzugten Ausführungsform der vorliegenden Erfindung wird eine Mischung aus ethylenisch ungesättigten Monomeren E) und Polymeren und/oder Copolymeren F) eingesetzt, welche durch partielle Polymerisation von mindestens einem ethylenisch ungesättigten Monomeren E) erhalten wird. Zu diesem Zweck wird das mindestens eine ethylenisch ungesättigte Monomer E), vorzugsweise MMA, günstigerweise mit einem Initiator versetzt und vorzugsweise durch Erhitzen zur Polymerisation gebracht. Die Polymerisation wird zweckmäßigerweise durch Abkühlen oder Stoppen mit einem Inhibitor an einem bestimmten Punkt abgebrochen, so dass sich die gewünschte Viskosität einstellt. Der so hergestellte Sirup kann dann mit den weiteren erfindungsgemäßen Komponenten versetzt, in die Form gegossen und auspolymerisiert werden.

Neben den vorstehend genannten Komponenten können die erfindungsgemäßen Zusammensetzungen gegebenenfalls weitere übliche Zusatzstoffe, wie beispielsweise Füllstoffe, insbesondere Glasfasern und Glasgewebe, sowie Pigmente enthalten, wobei insbesondere die Einfärbung der aus den erfindungsgemäßen Zusammensetzungen erhältlichen Polymerisate bevorzugt wird. Weitere Details zum Einfärben von Polymeren können dem Stand der Technik, insbesondere den Druckschriften:
- Vieweg-Esser, Kunstoffhandbuch, Band IX, "Polymethacrylate", C. Hanser
- Verlag 1975
- Batzer, Polymere Werkstoffe, Bd. II, Technologie 1. S. 337-353, Georg
- Thieme Verlag 1984)
- Balzer, Polymere Werkstoffe loc. cit, S. 349 (betrifft insbesondere: Anwendung von Farbpasten)
- DE_OS 15 92 897 (betrifft insbesondere: Pigmentpräparationen zum Einfärben von Kunststoffen)
- GB-PS 1 148 168 (betrifft insbesondere: Pigmentpasten)
- US-PS 3 471 433 (betrifft insbesondere: Pigmentmasterbatches)
entnommen werden, auf deren Offenbarung hiermit explizit bezug genommen wird.

Zur Herstellung der erfindungsgemäßen Zusammensetzungen wird vorzugsweise das Reaktionsprodukt der Umsetzung a) mit den weiteren Komponenten D) bis F) vermischt und zweckmäßigerweise gerührt, bis man eine homogene Lösung erhält. Die Reihenfolge der Zusätze ist dabei nicht entscheidend, doch werden die in kleineren Mengen anwesenden Monomere vorzugsweise dem oder den überwiegenden Monomeren zugesetzt. Ist eine Stoffmischung mit höherer Viskosität gewünscht, so wird, wie oben beschrieben, eine homogene Lösung hergestellt, die gewünschte Menge eines Polymerisates, z. B. Polymethylmethacrylat, zugesetzt und das Gemisch so lange gerührt, bis auch diese Lösung homogen ist.

Die Stoffmischungen der Erfindung sind auch ohne Zusatz eines Polymerisationskatalysators reaktionsfähig, wobei ihre Reaktionsfähigkeit von der verwendeten Kombination abhängig ist. Sollen die Stoffgemische kurz nach der Herstellung verwendet werden, so ist kein Zusatz eines Inhibitors erforderlich. Ihre Lebensdauer lässt sich auch durch Lagern unter Kühlung wesentlich verlängern.

Ist eine längere Lagerung erforderlich oder sollen sie auf normalen Handelswegen versandt werden, so ist die Verwendung von Polymerisationsinhibitoren in der Regel notwendig. Geeignete Inhibitoren sind Vinylpolymerisationsverhinderungsmittel wie tert.-Butylcatechin, Hydrochinon, Hydrochinon-monoethylether und 2,5-di-tert.-Butylhydrochinon. Die erforderlichen Mengen schwanken je nach Monomerenzusammensetzung und den Lagerungsbedingungen, sie liegen jedoch im allgemeinen im Bereich von 0,005 bis 0,1 Gew.-%, bezogen auf das Gesamtgewicht der Zusammensetzung.

Die Polymerisation der erfindungsgemäßen Zusammensetzungen erfolgt vorzugsweise durch die Masse- oder Substanzpolymerisation. Dabei wird unter der Masse- oder Substanzpolymerisation ein Polymerisationsverfahren verstanden, bei dem Monomere ohne Lösungsmittel polymerisiert werden, so dass die Polymerisationsreaktion in Masse oder in Substanz vonstatten geht. Im Gegensatz dazu ist die Polymerisation in Emulsion (sogenannte Emulsionspolymerisation) und die Polymerisation in der Dispersion (sogenannte Suspensionspolymerisation) zu sehen, bei der die organischen Monomere mit Schutzkolloiden und/oder Stabilisatoren in wässriger Phase suspendiert werden und mehr oder weniger grobe Polymerisatteilchen gebildet werden. Eine besondere Form der Polymerisation in heterogener Phase ist die Perlpolymerisation, die im wesentlichen zur Suspensionspolymerisation zu rechnen ist.

Die Polymerisationsreaktion kann grundsätzlich auf jede dem Fachmann geläufige Weise ausgelöst werden, beispielsweise unter Verwendung eines Radikalinitiators (z. B. Peroxid, Azoverbindung) oder durch Bestrahlen mit UV-Strahlen, sichtbarem Licht, α-Strahlen, β-Strahlen oder γ-Strahlen, oder eine Kombination derselben eingeleitet werden.

In einer bevorzugten Ausführungsform der vorliegenden Erfindung werden zur Initiierung der Polymerisation ein oder mehrere lipophile radikalische Polymerisationsinitiatoren verwendet. Die radikalischen Polymerisationsinitiatoren sind insbesondere deswegen lipophil, damit sie sich in der Mischung der Substanzpolymerisation lösen. Zu einsetzbaren Verbindungen gehören neben den klassischen Azoinitiatoren, wie Azoisobuttersäurenitril (AIBN), 1,1-Azobiscyclohexancarbonitril und Azobis-(2,4-dimethylvaleronitril), u. a. aliphatische Peroxyverbindungen, wie z. B. tert.-Amylperoxyneodecanoat, tert.-Amylperoxypivalat, tert.-Butylperoxypivalat, tert.-Amylperoxy-2-ethylhexanoat, tert.-Butylperoxy-2-ethylhexanoat, tert.-Amylperoxy-3,5,5,-trimethylhexanoat, Ethyl-3,3-di-(tert.-amylperoxy)-butyrate, tert.-Butylperbenzoat, tert.-Butylhydroperoxid, Decanoylperoxid, Laurylperoxid, Benzoylperoxid und beliebige Mischungen der genannten Verbindungen. Von den vorgenannten Verbindungen ist AIBN ganz besonders bevorzugt.

In einer weiteren bevorzugten Ausführungsform der vorliegenden Erfindung erfolgt die Einleitung der Polymerisation unter Verwendung bekannter Photoinitiatoren durch Bestrahlen mit UV-Strahlen oder dergleichen. Hier können die gängigen, kommerziell erhältlichen Verbindungen wie z. B. Benzophenon, α,α-Diethoxyacetophenon, 4,4-Diethylaminobenzophenon, 2,2-Dimethoxy-2-phenylacetophenon, 4-Isopropylphenyl-2-hydroxy-2-propylketon, 1-Hydroxycyclohexylphenylketon, Isoamyl-p-dimethylaminobenzoat, Methyl-4-dimethylaminobenzoat, Methyl-o-benzoylbenzoat, Benzoin, Benzoinethylether, Benzoinisopropylether, Benzoinisobutylether, 2-Hydroxy-2-methyl-1-phenylpropan-1-on, 2-Isopropylthioxanthon, Dibenzosuberon, 2,4,6-Trimethylbenzoyldiphenylphosphinoxid, Bisacylphosphinoxid und andere zum Einsatz kommen, wobei die genannten Photoinitiatoren allein oder in Kombination von zwei oder mehreren oder in Kombination mit einem der obigen Polymerisationsinitiatoren benutzt werden können.

Im Rahmen der vorliegenden Erfindung werden die Polymerisationsinitiatoren zweckmäßigerweise in Abhängigkeit der gewünschten Scheibendicke des Polymers ausgewählt. Vorzugsweise werden für die Herstellung dünner Platten mit einer Dicke < 100 mm Azoinitiatoren oder Peroxide als Polymerisationsinitiatoren eingesetzt. Dickere Platten mit einer Dicke > = 100 mm werden aufgrund der leichteren Regelung der Polymerisation und der damit verbundenen Wärmeabfuhr vorteilhaft unter Verwendung von Photoinitiatoren hergestellt.

Die Menge der Radikalbildner kann in weiten Bereichen variieren. Bevorzugt kommen beispielsweise Mengen im Bereich von 0,01 bis 5,0 Gew.-%, bezogen auf das Gewicht der Gesamtzusammensetzung zum Einsatz. Besonders bevorzugt werden Mengen im Bereich von 0,01 bis 2,0 Gew.-%, insbesondere Mengen im Bereich von 0,01 bis 0,5 Gew.-%, jeweils bezogen auf das Gewicht der Gesamtzusammensetzung.

Die für die Polymerisation zu wählende Polymerisationstemperatur ist dem Fachmann offensichtlich. Sie wird in erster Linie durch den bzw. die gewählten Initiator(en) und die Art und Weise der Initiierung (thermisch, durch Bestrahlung u. a.) bestimmt. Es ist bekannt, dass die Polymerisationstemperatur die Produkteigenschaften eines Polymeren beeinflussen kann. Daher werden im Rahmen der vorliegenden Erfindung Polymerisationstemperaturen im Bereich von 20,0°C bis 100,0°C, zweckmäßigerweise im Bereich von 20,0°C bis 80,0°C, insbesondere im Bereich von 20,0°C bis 60,0°C bevorzugt. In einer besonders bevorzugten Ausführungsform der vorliegenden Erfindung wird die Reaktionstemperatur während der Reaktion, vorzugsweise stufenweise erhöht. Weiterhin hat sich auch ein Tempern bei erhöhter Temperatur, beispielsweise bei 100°C, gegen Ende der Reaktion als zweckmäßig erwiesen.

Weiterhin ist es im Rahmen der vorliegenden Erfindung besonders zweckmäßig, die jeweiligen konkreten Polymerisationsbedingungen in Abhängigkeit von der gewünschten Scheibendicke des Polymers zu wählen. Dickere Scheiben werden vorzugsweise zur Sicherstellung der Wärmeabfuhr langsamer polymerisiert als dünne Scheiben, indem man tiefere Polymerisationsbedingungen und geringere Initiatormengen wählt.

Die Reaktion kann sowohl bei Unterdruck als auch bei Überdruck stattfinden. Vorzugsweise wird sie aber bei Normaldruck durchgeführt. Die Reaktion kann unter Luft als auch unter Schutzgasatmosphäre stattfinden, wobei vorzugsweise ein möglichst geringer Sauerstoffanteil vorhanden ist, da dieser eine mögliche Polymerisation inhibiert.

Gemäß der vorliegenden Erfindung werden die erfindungsgemäßen Zusammensetzungen vorzugsweise zur Herstellung von Verbundgläsern verwendet, indem man die erfindungsgemäßen Stoffmischungen, gegebenenfalls inklusive einem der vorstehend beschriebenen Initiatoren, zwischen zwei dünne Glasplatten, die entsprechend in einer Polymerisationszelle gehalten werden, polymerisert. Dies führt zu Verbundgläsern aus einem transparenten Kunststoff-Kern und zwei damit fest verbundenen Glasscheiben, vorzugsweise Silikatglasscheiben. Dabei weisen erfindungsgemäß besonders bevorzugte Verbundgläser einen Kunststoff-Kern mit einer Dicke im Bereich von 1 bis 200 mm, insbesondere im Bereich von 1 bis 10 mm, und Glasscheiben mit einer Dicke im Bereich von 0,1 bis 3 mm auf.

Erfindungsgemäß bezeichnet Glas Stoffe im amorphen, nichtkristallinen Festzustand. Der Glaszustand lässt sich physikalisch-chemisch als eingefrorene unterkühlte Flüssigkeit bzw. Schmelze auffassen. Bei hinreichend großer Abkühlgeschwindigkeit einer Schmelze oder bei der Kondensation von Molekülen aus der Dampfphase auf extrem gekühlte Substrate lässt sich praktisch jeder Stoff metastabil in den Glaszustand überführen. Im Rahmen der vorliegenden Erfindung wird unter Glas insbesondere anorganische, vorzugsweise oxidische Schmelzprodukte verstanden, die durch einen Einfriervorgang ohne Auskristallisation der Schmelzphasenkomponenten in den festen Zustand überführt werden. Erfindungsgemäße besonders bevorzugte Gläser umfassen abgekühlte Schmelzen, welche Siliciumdioxid (SiO₂), Calciumoxid (CaO), Natriumoxid (Na₂O) mit z.T. größeren Mengen von Bortrioxid (B₂O₃), Aluminiumoxid (Al₂O₃), Bleioxid (PbO), Magnesiumoxid (MgO), Bariumoxid (BaO) und/oder Kaliumoxid (K₂O), insbesondere Siliciumdioxid (SiO₂), enthalten. Für weitere Details wird auf die gängige Fachliteratur, beispielsweise auf CD Römpp Chemie Lexikon- Version 1.0, Stuttgart/New York; Georg Thieme Verlag; 1995; Stichwort: Glas verwiesen.

Die erfindungsgemäß einsetzbaren Polymerisationszellen unter liegen keinen besonders Beschränkungen, vielmehr sind alle aus dem Stand der Technik bekannten einsetzbar. Beispielsweise können Polymerisationszellen aus Glas und/oder polierten Edelstahlplatten verwendet werden.

Obwohl Sauerstoffspuren bekanntermaßen die Polymerisation meist stören und unter Umständen sogar verhindern können, ist es im Rahmen der vorliegenden Erfindung im allgemeinen nicht notwendig, die erfindungsgemäßen Zusammensetzungen vor der Polymerisation zu entgasen. Dennoch wird gemäß einer bevorzugten Ausführungsform der vorliegenden Erfindung die erfindungsgemäße Zusammensetzung, insbesondere wenn sie Polymer und/oder Copolymere F) enthält, entgast, um eingeschlossene Luftblasen sowie gelösten Sauerstoff zu entfernen. Weiterhin wird die Polymerisation vorzugsweise unter Sauerstoffausschluß durchgeführt.

Die erfindungsgemäßen Verbundgläser zeichnen sich durch eine hohe Hagelbeständigkeit, vorzugsweise mit einer Bruchenergie > 1,2 J, eine hohe Verbundfestigkeit, eine hohe Steifigkeit, vorzugsweise mit einer Durchbiegung < 1 mm, eine hohe Gasdichtigkeit, vorzugsweise mit einer Wasserdampfdurchlässigkeit gemäß DIN 53122 < 0,05 g/m², insbesondere < 0,01 g/m², in 24 h, eine hohe Kratzfestigkeit, vorzugsweise mit einer Trübung gemäß DIN 52347 < 1%, eine hohe Schlagfestigkeit, eine hohe Chemikalienbeständigkeit sowie durch ein niedrigeres spezifisches Gewicht, vorzugsweise < 2,6 kg/l, insbesondere < 2,0 kg/l, aus. Mögliche Einsatzgebiete für die erfindungsgemäßen Verbundgläser sind dem Fachmann offensichtlich. Sie eignen sich insbesondere für alle Anwendungen, die für Verbundgläser vorgezeichnet sind. Aufgrund ihrer charakteristischen Eigenschaften sind sie er vor allem für Fenster, Dachfenster, Glastüren, Verglasungen von Wintergärten und Gewächshäusern, Lärmschutzwände mit besonders guter Eignung zur Rückstandslosen Entfernung von Graffiti, Aquarien, Vitrinen, Verkaufstheken, Sicherheitsvitrinen, Schaufenster, z. B. in Juwelierläden, und/oder Balkonbrüstungen geeignet.

Infolge ihrer hohen spezifischen Haftung an Glas finden die erfindungsgemäßen Zusammensetzungen auch für weitgehende Verwendung für Zwecke, bei denen eine Bindung von Glas an verschiedene andere Oberflächen erforderlich ist. Daher lassen sie sich für die Bindung von Glas an Glas verwenden, beispielsweise bei der Herstellung von zusammengesetzten Linsen, bei der Bindung von Glas oder Kunststoffgegenständen an Metallflächen und bei der Bindung von Kunststoffgegenständen an Glasflächen.

Nachfolgend wird die Erfindung durch Beispiel und Vergleichsbeispiel eingehender erläutert, ohne dass die Erfindung auf dieses Beispiel beschränkt werden soll.

### Beispiel

**Tabelle 1: Formulierung**

| Nr. | Stoffbezeichnung | Menge [g] | Menge [%] |
|---|---|---|---|
| 1 | MMA | 2910,6 | 97,02 |
| 2 | γ-Methacryloxypropyl-triethoxysilan | 30,0 | 1,0 |
| 3 | Wasser | 6,0 | 0,2 |
| 4 | Methacrylsäure | 1,2 | 0,04 |
| 5 | Glycidylmethacrylat | 51,0 | 1,7 |
| 6 | Azobis-(isobutyronitril) | 0,9 | 0,03 |
| 7 | Azobis-(2,4-dimethylvaleronitril) | 0,3 | 0,01 |

### Versuchsdurchführung

Die Reaktanden 1, 5, 6 und 7 wurden gemischt (Lösung A). Separat davon wurden die Reaktanden 2, 3 und 4 vereinigt und 1 h gerührt, bis sich eine homogene Phase gebildet hat (Lösung B). Die beiden Lösungen wurden vereinigt und in eine Polymerisationskammer gefüllt; die zwei äußere Scheiben aus Stützglas, ca. 6 - 8 mm dick, umfasste. Auf den Innenseiten der Stützscheiben waren jeweils eine dünne Silikatglasscheibe, ca. 0,4 -1,0 mm dick, angeordnet. Zum Abdichten wurde zwischen den beiden dünnen Scheiben eine Dichtschnur, beispielsweise aus PVC, verwendet, deren Dicke variiert werden konnte.

Je nach der gewünschten Dicke der PMMA-Platte wurde bei 30 - 45°C für 17 - 75 h polymerisiert. Dabei musste die Dichtschnur nach einer gewissen Polymerisationsdauer entfernt werden; beispielsweise für einen 18 mm-PMMA-Kern nach 32 h bei 30°C, um eine Zerstörung der Platte durch Schrumpfen zu vermeiden.

Nach der Polymerisation wurde der Verbund bei 100°C für 3 h getempert. Anschließend konnten die äußeren Stützgläser entfernt werden. Die resultierenden Verbundgläser wurden gegebenenfalls mit einem Wasserstrahl auf die gewünschte Größe zurecht geschnitten.

### Vergleichsbeispiel 1

Die Durchführung erfolgte wie im erfindungsgemäßen Beispiel, jedoch wurde die Lösung B nicht hydrolysiert, d. h. die Komponenten wurden miteinander vermischt und direkt polymerisert.

Die so hergestellten Platten zeigten bereits im Wasserbad Ablösungen bzw. die dünnen Glasplatten lösten sich bereits nach Entfernen der Dichtschnur im Polymerisationsbad ab.

### Vergleichsbeispiel 2-4

Die Durchführung erfolgte wie im erfindungsgemäßen Beispiel, jedoch wurde die Komponente 3 (Vergleichsbeispiel 2), 4 (Vergleichsbeispiel 3) oder 5 (Vergleichsbeispiel 4) weggelassen. Bei den so hergestellten Platten lösten sich die dünnen Glasplatten während oder nach der Polymerisation vom PMMA-Kern ab. Dabei erfolgte die Ablösung zum Teil schlagartig unter Bildung von Splittern im Temperschrank.

### A. Prüfung der Hagelbeständigkeit

Verbundglasscheiben mit unterschiedlichen Dicken wurden im Hagelschlagtest gegenüber Silikatglasscheiben in Anlehnung an die schweizer Norm SEA-V 280 geprüft. Die Scheiben wurden mit Polyamidkugeln, 20 mm Durchmesser, Gewicht 4,49 g beschossen. Die zum Bruch der Scheiben benötigte Energie der Kugeln wurde bestimmt. Die maximale Energie, bei der die Scheibe noch nicht bricht wurde ermittelt. Das Bruchbild wurde beurteilt. Die Ergebnisse werden in Tabelle 2 zusammengefasst.

Der Tabelle 2 ist zu entnehmen, dass ein 6 mm dickes Silikatglas bereits bei einer Bruchenergie von 1,0 bis 1,2 J bricht, wohingegen zum Brechen einer Verbundscheibe mit 3,8 mm Gesamtdicke und nur 0,4 mm dicken Außenscheiben aus Glas mehr als die 1,5-fache Energie erforderlich ist. Ein 5 mm dickes Verbundglas brach auch bei 3,6 J nicht, das entspricht einer Geschwindigkeit der Polyamidkugeln von 38,82 m/s. Dieser Wert ist bereits so hoch, dass der Test abgebrochen werden musste, da die Prüfapparatur sonst beschädigt worden wäre.

**Tabelle 2: Prüfung von Verbundgläsern im Hagelschlagtest**

| Nr. | Glasdicke [mm] | Kerndicke [mm] | Gesamtdicke [mm] | Bruchenergie [J] | Bruchbild |
|---|---|---|---|---|---|
| 1 | 0,4 | 3,0 | 3,8 | 0,7 | sternförmiger Riss |
| 2 | 0,4 | 3,0 | 3,8 | 1,6 | sternförmiger Riss |
| 3 | 1,0 | 3,0 | 5,0 | 1,2 | sternförmiger Riss |
| 4 | 1,0 | 3,0 | 5,0 | 3,6 | sternförmiger Riss |
| 5 | 6,0 | Vergleich Silikatglas | 6,0 | 1,0 | unbeschädigt |
| 6 | 6,0 | Vergleich Silikatglas | 6,0 | 1,0 | zerbrochen |
| 7 | 6,0 | Vergleich Silikatglas | 6,0 | 1,2 | zerbrochen |

### B. Verbundfestigkeit

Im Wasserlagerungstest mit zyklischer Temperaturwechselbelastung von 7 h heiß, 17 h kalt wurden die erfindungsgemäßen Verbundwerkstoffplatten in einem Zyklus 7 h bei 50°C gehalten, anschließend wurde die Heizung ausgeschaltet, man ließ auf Raumtemperatur abkühlen und schaltete 17 h nach dem Beginn des Abkühlens die Heizung erneut ein. Der Test wurde über einen Zeitraum von > 4 Monaten durchgeführt, ohne, dass am Verbund eine Änderung beobachtet wurde.

### C. Steifigkeit

Ein Stab aus dem Werkstoff mit den Maßen: 300 mm x 40 mm x 5 mm wurde auf zwei Stützen im Abstand von 250 mm platziert, ein Gewicht (500 ml Polyethylenflasche, gefüllt mit Bleikugeln, Gewicht 3500 g) wurde mittig auf dem Stab platziert. Die Durchbiegung wurde gemessen. Es wurden die Tabelle 3 wiedergegebenen Ergebnisse erhalten.

**Tabelle 3: Steifigkeit**

| Nr. | Werkstoff | Durchbiegung [mm] |
|---|---|---|
| 7 | PMMA | 12 |
| 4 | Verbundglas (1 mm/3 mm/1 mm) | < 1 |

### D. Gasdichtigkeit:

Die Wasserdampfdurchlässigkeit der Werkstoffe wurde gemäß DIN 53122, Blatt 1 (11/1974) bestimmt. Analog wurde die Argondurchlässigkeit ermittelt. Es wurden die Tabelle 4 wiedergegebenen Ergebnisse erhalten.

**Tabelle 4: Wasserdampfdurchlässigkeit gemäß DIN 53122**

| Werkstoff | Dicke [mm] | Wasserdampfdurchlässigkeit [g/m²] in 24 h | Argondurchlässigkeit [g/m²] in 24 h |
|---|---|---|---|
| PMMA | 5 | 0,2 | - |
| Silikatglas | 5 | 0 | 0 |
| Verbundglas (1 mm/3 mm/1 mm) | 5 | 0 | 0 |

### E. Kratzfestigkeit

Man führt die Messung der Kratzfestigkeit mit dem Taber Abraser nach DIN 52347 mit 5,4 N Gewichtsbelastung bei 100 Umdrehungen durch. Man erhält die in Tabelle 5 angegebenen Werte.

**Tabelle 5: Kratzfestigkeit**

| Werkstoff | Trübung [%] |
|---|---|
| PMMA | 20-30 |
| Silikatglas | < 1 |
| Verbundglas (1 mm/3 mm/1 mm) | < 1 |

### F.Schiagfestigkeit

Schlägt man mit einem Hammer (Gewicht: 255 g) auf eine horizontal aufliegende Verbundglasscheibe und eine Silikatglasscheibe zum Vergleich, so wird die Schlagfestigkeit offensichtlich. Die Silikatglasscheibe zerspringt erwartungsgemäß in viele Splitter; die erfindungsgemäße Verbundglasscheibe zeigt nur an der Stelle des Aufschlags einen sternförmigen Riss.

### G. spezifisches Gewicht

Das Gewicht der Verbundscheibe ergibt sich aus den spezifischen Gewichten der Bestandteile: Acrylglas trägt entsprechend seines Volumenanteils mit einer Dichte von 1,2 kg/l bei; Silikatglas hat eine Dichte von 2,6 kg/l. Das Gesamtgewicht der Verbundscheibe ergibt sich aus den Volumenanteilen der Komponenten und ist bei einem dickeren Kern und dünneren Außenscheiben günstiger, bei dickeren Außenscheiben und dünnerem Kern entsprechend ungünstiger.

### H. Chemikalienbeständigkeit

Die erfindungsgemäßen Verbundscheiben weisen eine Chemikalienbeständigkeit wie Silikatglas auf.

## Patentansprüche

1. Polymerisierbare Zusammensetzung erhältlich durch:
a) Umsetzung von
A)0,5 bis 5 Gewichtsteilen mindestens einer Silicium-Verbindung der Formel (I):
SiₘR¹ₙR²ₒOᵣXₛ (I)
wobei R¹ jeweils unabhängig voneinander einen Alkenyl- oder Cycloalkenylrest mit 2 bis 12 Kohlenstoffatomen bezeichnet, der eine oder mehrere Estergruppen aufweisen kann,
R² jeweils unabhängig voneinander einen Alkyl- oder Cycloalkylrest mit 1 bis 12 Kohlenstoffatomen kennzeichnet,
X jeweils unabhängig voneinander ein Halogenatom oder eine Alkoxygruppe mit 1 bis 6 Kohlenstoffatomen darstellt,
m eine ganze Zahl größer gleich 1 ist,
n eine ganze Zahl zwischen 1 und 2*m+1 ist,
o eine ganze Zahl zwischen 0 und 2*m ist,
r eine ganze Zahl zwischen 0 und m-1 ist,
s eine ganze Zahl zwischen 1 und 2*m+1 ist, und
wobei m, n, o und s der Beziehung (1) genügen: $n + o + s = 2 * m + 2$ mit
B) 0,01 bis 2,0 Gewichtsteilen Wasser und
C) 0 bis 4,0 Gewichtsteilen mindestens einer Säure;
und
b) anschließende Zugabe von
D) 0,5 bis 5 Gewichtsteilen mindestens eines (Meth)acrylates der Formel (II) 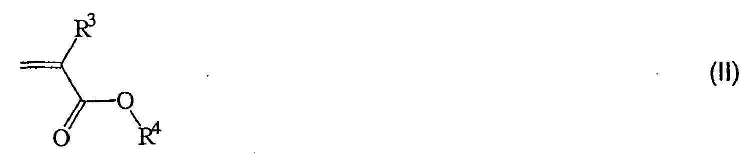 wobei R³ ein Wasserstoffatom oder eine Methylgruppe ist und R⁴ einen aliphatischen oder cycloaliphatischen Rest mit 1 bis 20 Kohlenstoffatomen bezeichnet, der mindestens eine Hydroxyl-, Thiol-, primäre Amino-, sekundäre Amino-, und/oder eine Epoxygruppe aufweist,
E) 98,99 bis 55 Gewichtsteilen mindestens eines polymerisierbaren, von D) verschiedenen, ethylenisch ungesättigten Monomeren,
F) 0 bis 30 Gewichtsteilen mindestens eines Polymers und/oder Copolymers, welches durch Polymerisation bzw. Copolymerisation mindestens eines ethylenisch ungesättigten Monomeren E) erhältlich ist.

2. Zusammensetzung gemäß Anspruch 1 erhältlich, indem man mindestens eine Silicium-Verbindung der Formel (Ia)
SiR¹ₙXₛ (Ia)
als Silicium-Verbindung A) einsetzt.

3. Zusammensetzung gemäß Anspruch 1 erhältlich, indem man eine Mischung enthaltend mindestens eine Silicium-Verbindung der Formel (Ia)
SiR¹ₙXₛ (Ia)
und mindestens eine Silicium-Verbindung der Formel (Ib)
SiR²ₒXₛ (Ib)
an Stelle der Silicium-Verbindung A) einsetzt.

4. Zusammensetzung gemäß mindestens einem der vorangehenden Ansprüche, indem man mindestens eine Silicium-Verbindung der Formel (Ic) 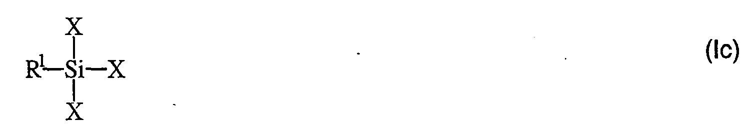 als Silicium-Verbindung A) einsetzt.

5. Zusammensetzung gemäß mindestens einem der vorangehenden Ansprüche erhältlich, indem man γ-Methacryloxypropyl-triethoxysilan, γ-Acryloxypropyltriethoxysilan, γ-Methacryloxypropyl-trimethoxysilan, γ-Acryloxypropyltrimethoxysilan und/oder Vinyltriethoxysilan als Silicium-Verbindung A) einsetzt.

6. Zusammensetzung gemäß Anspruch 5 erhältlich, indem man γ-Methacryloxypropyl-triethoxysilan als Silicium-Verbindung A) einsetzt.

7. Zusammensetzung gemäß mindestens einem der vorangehenden Ansprüche erhältlich, indem man die Umsetzung a) bei einer Temperatur im Bereich von 0°C bis 100°C durchführt.

8. Zusammensetzung gemäß mindestens einem der vorangehenden Ansprüche, indem man die Umsetzung a) solange durchführt, bis man eine homogene Lösung erhält.

9. Zusammensetzung gemäß mindestens einem der vorangehenden Ansprüche erhältlich, indem man die Umsetzung a) 15 Minuten bis 48 Stunden durchführt.

10. Zusammensetzung gemäß mindestens einem der vorangehenden Ansprüche erhältlich, indem man mindestens ein Hydroxylalkyl(meth)acrylat, Aminoalkyl(meth)acrylat, Oxiranyl(meth)acrylat und/oder Mercaptoalkyl(meth)acrylat als (Meth)acrylat D) einsetzt.

11. Zusammensetzung gemäß Anspruch 11 erhältlich, indem man Glycidyl(meth)acrylat als (Meth)acrylat D) einsetzt.

12. Zusammensetzung gemäß mindestens einem der vorangehenden Ansprüche erhältlich, indem man zu mindestens 50 Gew.-% bezogen auf die Gesamtmenge an ethylenisch ungesättigten Monomeren E) mindestens ein (Meth)acrylat der Formel (III) als ethylenisch ungesättigtes Monomer E) einsetzt. 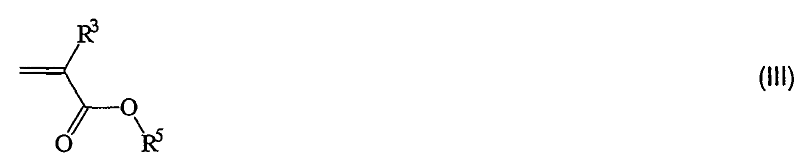 wobei R³ ein Wasserstoffatom oder eine Methylgruppe ist und R⁵ einen aliphatischen oder cycloaliphatischen Rest mit 1 bis 20 Kohlenstoffatomen bezeichnet.

13. Zusammensetzung gemäß Anspruch 12 erhältlich, indem man zu mindestens 50 Gew.-% bezogen auf die Gesamtmenge an ethylenisch ungesättigten Monomeren E) Methylmethacrylat als ethylenisch ungesättigtes Monomer E) einsetzt.

14. Zusammensetzung gemäß mindestens einem der vorangehenden Ansprüche, **dadurch gekennzeichnet, dass** man mindestens einen Schlagzähmodifizierer als Polymer und/oder Copolymer F) einsetzt.

15. Zusammensetzung gemäß mindestens einem der vorangehenden Ansprüche, **dadurch gekennzeichnet, dass** man eine Mischung aus 0,1 bis 10 Gewichtsteilen mindestens eines Schlagzähmodifizierers und 29,9 bis 20 Gewichtsteile mindestens eines linearen oder verzweigten Polymers und/oder Copolymers als Polymer und/oder Copolymer F) einsetzt.

16. Zusammensetzung gemäß mindestens einem der vorangehenden Ansprüche, **dadurch gekennzeichnet, dass** sie weiterhin 0,01 bis 5 Gewichtsteile mindestens eines lipophilen radikalischen Polymerisationsinitiators enthält.

17. Polymer erhältlich durch Polymerisation einer Zusammensetzung gemäß mindestens einem der Ansprüche 1 bis 16.

18. Verbundglas aus einem transparenten Kunststoff-Kern und zwei damit fest verbundenen Glasscheiben, wobei der Kunststoffkern durch Polymerisation einer Zusammensetzung gemäß mindestens einem der Ansprüche 1 bis 16 erhältlich ist.

19. Verbundglas gemäß Anspruch 18, **dadurch gekennzeichnet, dass** der Kunststoff-Kern eine Dicke im Bereich von 1 bis 200 mm und die Glasscheiben eine Dicke im Bereich von 0,1 bis 3 mm aufweisen.

20. Verfahren zur Herstellung eines Verbundglases gemäß Anspruch 18 und/oder 19, **dadurch gekennzeichnet, dass** man eine Zusammensetzung gemäß mindestens einem der Ansprüche 1 bis 16 in einen Verbund einarbeitet und Polymerisationsbedingungen aussetzt.

21. Verfahren nach Anspruch 20, **dadurch gekennzeichnet, dass** man die Zusammensetzung vor der Polymerisation entgast.

22. Verwendung eines Verbundglases gemäß Anspruch 18 und/oder 19 für Fenster, Dachfenster, Glastüren, Wintergärten, Gewächshäuser, Lärmschutzwände, Aquarien, Vitrinen, Verkaufstheken, Sicherheitsvitrinen, Schaufenster und/oder Balkonbrüstungen.

## Claims

1. Polymerizable composition obtainable via:
a) reaction of
A) from 0.5 to 5 parts by weight of at least one silicon compound of the formula (I):
SiₘR¹ₙR²ₒOᵣXₛ (I)
where each R¹, independently of the others, is an alkenyl or cycloalkenyl radical having from 2 to 12 carbon atoms and optionally having one or more ester groups,
each R², independently of the others, is an alkyl or cycloalkyl radical having from 1 to 12 carbon atoms,
each X, independently of the others, is a halogen atom or an alkoxy group having from 1 to 6 carbon atoms,
m is a whole number greater than or equal to 1,
n is a whole number from 1 to 2*m+1,
o is a whole number from 0 to 2*m,
r is a whole number from 0 to m-1,
s is a whole number from 1 to 2*m+1, and
where m, n, o, and s comply with the relationship (1): $n + o + s = 2 * m + 2$ with
B) from 0.01 to 2.0 parts by weight of water, and
C) from 0 to 4.0 parts by weight of at least one acid;
and
b) then adding
D) from 0.5 to 5 parts by weight of at least one (meth)acrylate of the formula (II) 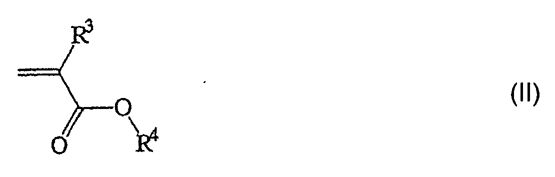 where R³ is a hydrogen atom or a methyl group, and R⁴ is an aliphatic or cycloaliphatic radical having from 1 to 20 carbon atoms and having at least one hydroxy, thiol, primary amino, secondary amino, and/or one epoxy group,
E) from 98.99 to 55 parts by weight of at least one polymerizable ethylenically unsaturated monomer other than D),
F) from 0 to 30 parts by weight of at least one polymer and/or copolymer which is obtainable via polymerization or, respectively, copolymerization of at least one ethylenically unsaturated monomer E).

2. Composition according to Claim 1, obtainable by using at least one silicon compound of the formula (Ia)
SiR¹ₙXₛ (Ia)
as silicon compound A).

3. Composition according to Claim 1, obtainable by using a mixture comprising at least one silicon compound of the formula (Ia)
SiR¹ₙXₛ (Ia)
and at least one silicon compound of the formula (Ib)
SiR²ₒXₛ (Ib)
instead of the silicon compound A).

4. Composition according to at least one of the preceding claims, using at least one silicon compound of the formula (Ic) 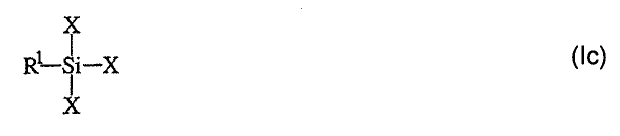 as silicon compound A).

5. Composition according to at least one of the preceding claims, obtainable by using γ-methacryloxypropyltriethoxysilane, γ-acryloxypropyltriethoxysilane, γ-methacryloxypropyltrimethoxysilane, γ-acryloxypropyltrimethoxysilane and/or vinyltriethoxysilane as silicon compound A).

6. Composition according to Claim 5, obtainable by using γ-methacryloxypropyltriethoxysilane as silicon compound A).

7. Composition according to at least one of the preceding claims, obtainable by carrying out the reaction a) at a temperature in the range from 0 to 100°C.

8. Composition according to at least one of the preceding claims, obtainable by carrying out the reaction a) until a homogeneous solution is obtained.

9. Composition according to at least one of the preceding claims, obtainable by carrying out the reaction a) for from 15 minutes to 48 hours.

10. Composition according to at least one of the preceding claims, obtainable by using at least one hydroxyalkyl (meth)acrylate, aminoalkyl (meth)acrylate, oxiranyl (meth)acrylate, and/or mercaptoalkyl (meth)acrylate, as (meth)acrylate D).

11. Composition according to Claim 11, obtainable by using glycidyl (meth)acrylate as (meth)acrylate D).

12. Composition according to at least one of the preceding claims, obtainable by using at least 50% by weight, based on the total amount of ethylenically unsaturated monomers E), of at least one (meth)acrylate of the formula (III) as ethylenically unsaturated monomer E) 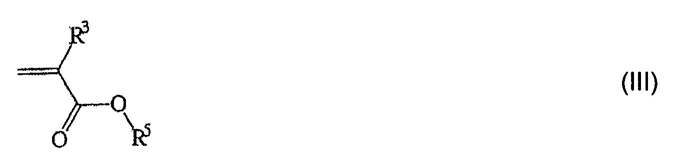 where R³ is a hydrogen atom or a methyl group, and R⁵ is a aliphatic or cycloaliphatic radical having from 1 to 20 carbon atoms.

13. Composition according to Claim 12, obtainable by using at least 50% by weight, based on the total amount of ethylenically unsaturated monomers E), of methyl methacrylate as ethylenically unsaturated monomer E).

14. Composition according to at least one of the preceding claims, **characterized in that** at least one impact modifier is used as polymer and/or copolymer F).

15. Composition according to at least one of the preceding claims, **characterized in that** use is made of a mixture composed of from 0.1 to 10 parts by weight of at least one impact modifier and from 29.9 to 20 parts by weight of at least one linear or branched polymer and/or copolymer, as polymer and/or copolymer F).

16. Composition according to at least one of the preceding claims, **characterized in that** it also comprises from 0.01 to 5 parts by weight of at least one lipophilic free-radical polymerization initiator.

17. Polymer obtainable via polymerization of a composition according to at least one of Claims 1 to 16.

18. Laminated glass composed of a transparent plastics core and of two glass panes securely bonded thereto, where the plastics core is obtainable via polymerization of the composition according to at least one of Claims 1 to 16.

19. Laminated glass according to Claim 18, **characterized in that** the plastics core has a thickness in the range from 1 to 200 mm and the glass panes have a thickness in the range from 0.1 to 3 mm.

20. Process for producing a laminated glass according to Claim 18 and/or 19, **characterized in that** the composition according to at least one of Claims 1 to 16 is incorporated into a composite and exposed to polymerization conditions.

21. Process according to Claim 20, **characterized in that** the composition is devolatilized prior to the polymerization process.

22. Use of a laminated glass according to Claim 18 and/or 19 for windows, roof windows, glass doors, conservatories, greenhouses, noise barriers, aquariums, display cases, sales counters, security display cases, display windows, and/or balcony parapets.

## Revendications

1. Composition polymérisable pouvant être obtenue par
a) réaction de
A) 0,5 à 5 parties en poids d'au moins un composé du silicium de formule (I)
S iₘR¹ₙR²ₒOᵣXₛ (I)
dans laquelle chaque radical R¹ représente indépendamment des autres un groupe alcényle ou cycloalcényle ayant 2 à 12 atomes de carbone, qui peut comporter un ou plusieurs groupes ester,
chaque radical R² représente indépendamment des autres un groupe alkyle ou cycloalkyle ayant 1 à 12 atomes de carbone,
chaque radical X représente indépendamment des autres un atome d'halogène ou un groupe alcoxy ayant 1 à 6 atomes de carbone,
m est un nombre entier supérieur ou égal à 1,
n est un nombre entier compris entre 1 et 2*m+1,
o est un nombre entier compris entre 0 et 2*m,
r est un nombre entier compris entre 0 et m-1,
s est un nombre entier compris entre 1 et 2*m+1, et où m, n, o et s satisfont à la relation (1) : $n + o + s = 2 * m + 2$ avec
B) 0,01 à 2,0 parties en poids d'eau et
C) 0 à 4,0 parties en poids d'au moins un acide ; puis
b) addition de
D) 0,5 à 5 parties en poids d'au moins un (méth)acrylate de formule (II) 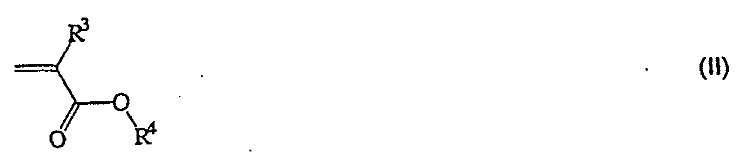 dans laquelle R³ est un atome d'hydrogène ou un groupe méthyle, et R⁴ est un radical aliphatique ou cycloaliphatique ayant 1 à 20 atomes de carbone, qui comprend au moins un groupe hydroxyle, thiol, amino primaire, amino secondaire, et/ou un groupe époxy,
E) 98,99 à 55 parties en poids d'au moins un monomère polymérisable, différent de D), à insaturation éthylénique,
F) 0 à 30 parties en poids d'au moins un polymère et/ou copolymère qui peut être obtenu par polymérisation ou copolymérisation d'au moins un monomère E) à insaturation éthylénique.

2. Composition selon la revendication 1, pouvant être obtenue par utilisation, en tant que composé du silicium A), d'au moins un composé du silicium de formule (Ia)
SiR¹ₙXₛ (Ia)

3. Composition selon la revendication 1, pouvant être obtenue par utilisation, au lieu du composé du silicium A), d'un mélange contenant au moins un composé du silicium de formule (Ia)
SiR 1ₙXₛ (Ia)
et au moins un composé du silicium de formule (Ib)
SiR²ₒXₛ (Ib)

4. Composition selon au moins l'une des revendications précédentes, pouvant être obtenue par utilisation, en tant que composé du silicium A), d'un composé du silicium de formule (Ic)

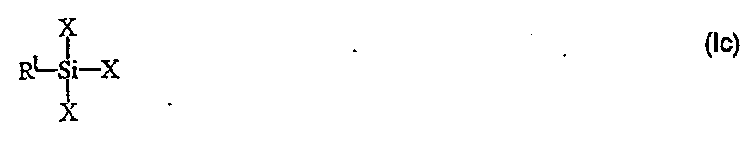

5. Composition selon au moins l'une des revendications précédentes, pouvant être obtenue par utilisation, en tant que composé du silicium A), de γ-méthacryloxypropyl-triéthoxysilane, de γ-acryloxypropyltriéthoxysilane, de γ-méthacryloxypropyltriméthoxysilane, de γ-acryloxypropyl-triméthoxysilane et/ou de vinyltriéthoxysilane.

6. Composition selon la revendication 5, pouvant être obtenue par utilisation, en tant que composé du silicium A), de γ-méthacryloxypropyl-triéthoxysilane.

7. Composition selon au moins l'une des revendications précédentes, pouvant être obtenue par mise en oeuvre de la réaction a) à une température comprise dans la plage de 0 à 100 °C.

8. Composition selon au moins l'une des revendications précédentes, pouvant être obtenue par la mise en oeuvre de la réaction a) jusqu'à obtention d'une solution homogène.

9. Composition selon au moins l'une des revendications précédentes, pouvant être obtenue par mise en oeuvre de la réaction a) pendant 15 minutes à 48 heures.

10. Composition selon au moins l'une des revendications précédentes, pouvant être obtenue par utilisation, en tant que (méth)acrylate D), d'un (méth)acrylate d'hydroxyalkyle, d'un (méth)acrylate d'aminoalkyle, d'un (méth)acrylate d'oxirannyle et/ou d'un (méth)acrylate de mercaptoalkyle.

11. Composition selon la revendication 11, pouvant être obtenue par utilisation, en tant que (méth)acrylate D), de (méth)acrylate de glycidyle.

12. Composition selon au moins l'une des revendications précédentes, pouvant être obtenue par utilisation, en tant que monomère E) à insaturation éthylénique, d'au moins 50 % en poids, par rapport à la quantité totale des monomères E) à insaturation éthylénique, d'au moins un (méth)acrylate de formule (III). 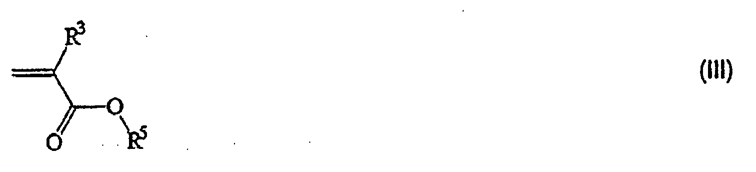 dans laquelle R³ est un atome d'hydrogène ou un groupe méthyle, et R⁵ est un radical aliphatique ou cycloaliphatique ayant 1 à 20 atomes de carbone.

13. Composition selon la revendication 12, pouvant être obtenue par utilisation, en tant que monomère E) à insaturation éthylénique, d'au moins 50 % en poids, par rapport à la quantité totale des monomères E) à insaturation éthylénique, de méthacrylate de méthyle.

14. Composition selon au moins l'une des revendications précédentes, **caractérisée en ce qu'**on utilise en tant que polymère et/ou copolymère F) au moins un agent modifiant la résistance au choc.

15. Composition selon au moins l'une des revendications précédentes, **caractérisée en ce qu'**on utilise, en tant que polymère et/ou copolymère F), un mélange de 0,1 à 10 parties en poids d'au moins un agent modifiant la résistance au choc et de 29,9 à 20 parties en poids d'au moins un polymère et/ou copolymère à chaîne droite ou ramifiée.

16. Composition selon au moins l'une des revendications précédentes, **caractérisée en ce qu'**elle contient en outre 0,01 à 5 parties en poids d'au moins un amorceur de polymérisation radicalaire lipophile.

17. Polymère pouvant être obtenu par polymérisation d'une composition selon au moins l'une des revendications 1 à 16.

18. Verre feuilleté, constitué d'un intercalaire plastique transparent et de deux feuilles de verre qui y sont fermement liées, l'intercalaire plastique pouvant être obtenu par polymérisation d'une composition selon au moins l'une des revendications 1 à 16.

19. Verre feuilleté selon la revendication 18, **caractérisé en ce que** l'intercalaire plastique a une épaisseur comprise dans la plage de 1 à 200 mm, et les feuilles de verre ont une épaisseur comprise dans la plage de 0,1 à 3 mm.

20. Procédé de fabrication d'un verre feuilleté selon la revendication 18 et/ou 19, **caractérisé en ce qu'**on incorpore dans un stratifié une composition selon au moins l'une des revendications 1 à 16, et on l'expose à des conditions de polymérisation.

21. Procédé selon la revendication 20, **caractérisé en ce qu'**on dégaze la composition avant la polymérisation.

22. Utilisation d'un verre feuilleté selon la revendication 18 et/ou 19 pour des fenêtres, des fenêtres de toit, des portes en verre, des jardins d'hiver, des serres, des murs antibruit, des aquariums, des vitrines, des comptoirs de vente, des vitrines de sécurité, des devantures et/ou des garde-corps de balcons.
